(19) **Europäisches Patentamt / European Patent Office / Office européen des brevets**

(11) **EP 4 596 100 A1**

(12) **EUROPEAN PATENT APPLICATION**
published in accordance with Art. 153(4) EPC

(43) Date of publication:
**06.08.2025 Bulletin 2025/32**

(21) Application number: **23872451.2**

(22) Date of filing: **27.09.2023**

(51) International Patent Classification (IPC):
**B01J 20/30** (2006.01)    **B01D 53/04** (2006.01)
**B01J 20/26** (2006.01)

(52) Cooperative Patent Classification (CPC):
**B01D 53/04; B01J 20/26; B01J 20/30;** Y02C 20/40

(86) International application number:
**PCT/JP2023/035227**

(87) International publication number:
**WO 2024/071229 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.09.2022 JP 2022154198**

(71) Applicant: **NITTO DENKO CORPORATION**
**Ibaraki-shi**
**Osaka 567-8680 (JP)**

(72) Inventor: **MINAMI Yui**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **METHOD FOR PRODUCING ACIDIC GAS ADSORBENT SHEET, AND ACIDIC GAS ADSORBENT SHEET**

(57)    A production method for an acidic gas adsorbent sheet of the present invention includes: a step (I) of, in a mixed solution including a compound C1 having a primary amino group, a compound C2 having an epoxy group, and a porogen and having an equivalent of the primary amino group greater than an equivalent of the epoxy group, reacting the compound C1 and the compound C2 to obtain a reaction product; a step (II) of cooling the mixed solution including the reaction product, then adding the compound C2 to the mixed solution, and reacting the reaction product and the compound C2 to obtain a reaction solution; a step (III) of curing the reaction solution to obtain a sheet-shaped cured body; and a step (IV) of removing the porogen from the sheet-shaped cured body. An acidic gas adsorbent sheet of the present invention includes a polymer having an amino group. When an adsorption test A1 is performed, an adsorption amount of carbon dioxide from start of the test to 1 hour after the start of the test is greater than 0.4 mmol/g, and when a desorption test B1 is performed, a desorption rate of carbon dioxide is greater than 80%.

**FIG.2**

EP 4 596 100 A1

**Description**

TECHNICAL FIELD

The present invention relates to a production method for an acidic gas adsorbent sheet and an acidic gas adsorbent sheet.

BACKGROUND ART

In recent years, in order to reduce the amount of carbon dioxide in atmospheric air, carbon capture and storage (CCS) and carbon capture and utilization (CCU) have been considered. In CCS and CCU, in some cases, capture of carbon dioxide is performed by separating carbon dioxide from atmospheric air.

As a method for separating acidic gas such as carbon dioxide from atmospheric air, an adsorption method in which acidic gas is caused to be adsorbed by an adsorbent to be separated has been developed. The adsorbent utilized in the adsorption method can adsorb acidic gas by coming into contact with atmospheric air, for example.

For example, Patent Literature 1 discloses an adsorbent including an amine compound.

CITATION LIST

Patent Literature

Patent Literature 1: JP 2014-533195 A

SUMMARY OF INVENTION

Technical Problem

According to a study by the present inventor, when making a sheet-shaped adsorbent, a dense layer (skin layer) tends to be formed at the surface thereof. The skin layer affects the diffusion of acidic gas into the interior of the adsorbent, and depending on the thickness of the skin layer, the ability to adsorb and desorb acidic gas tends to decrease. Therefore, there is room for improvement in a production method for a sheet-shaped adsorbent.

Therefore, the present invention aims to provide a production method for an acidic gas adsorbent sheet and an acidic gas adsorbent sheet that are suitable for adsorbing and desorbing acidic gas.

Solution to Problem

The present invention provides a production method for an acidic gas adsorbent sheet, including:

a step (I) of, in a mixed solution including a compound C1 having a primary amino group, a compound C2 having an epoxy group, and a porogen and having an equivalent of the primary amino group greater than an equivalent of the epoxy group, reacting the compound C1 and the compound C2 to obtain a reaction product;
a step (II) of cooling the mixed solution including the reaction product, then adding the compound C2 to the mixed solution, and reacting the reaction product and the compound C2 to obtain a reaction solution;
a step (III) of curing the reaction solution to obtain a sheet-shaped cured body; and
a step (IV) of removing the porogen from the sheet-shaped cured body.

Further, the present invention provides an acidic gas adsorbent sheet including a polymer having an amino group, wherein

when the following adsorption test A1 is performed, an adsorption amount of carbon dioxide from start of the test to 1 hour after the start of the test is greater than 0.4 mmol/g, and
when the following desorption test B1 is performed, a desorption rate of carbon dioxide is greater than 80%,
adsorption test A1: mixed gas composed of carbon dioxide, nitrogen, and water vapor is continuously fed into a container containing the acidic gas adsorbent sheet for 15 hours, wherein a concentration of the carbon dioxide in the mixed gas is 400 vol ppm, and the mixed gas has a temperature of 20°C and a humidity of 50%RH, and
desorption test B1: the acidic gas adsorbent sheet after the adsorption test A1 is performed is heated at 50°C for 15 hours while the mixed gas is continuously fed into the container.

Advantageous Effects of Invention

According to the present invention, it is possible to provide a production method for an acidic gas adsorbent sheet and an acidic gas adsorbent sheet that are suitable for adsorbing and desorbing acidic gas.

BRIEF DESCRIPTION OF THE DRAWINGS

FIG. 1 is a diagram for describing methods for measuring an adsorption amount and a desorption rate of carbon dioxide by an acidic gas adsorbent sheet.
FIG. 2 is a cross-sectional view schematically showing an example of an acidic gas adsorbent sheet according to a second embodiment of the present invention.
FIG. 3 is a cross-sectional view schematically showing a modification of the acidic gas adsorbent sheet according to the second embodiment of the present invention.
FIG. 4A is a perspective view schematically showing an example of a structure including acidic gas adsorbent sheets.
FIG. 4B is a perspective view schematically showing a modification of the structure including the acidic gas adsorbent sheets.
FIG. 5 is an SEM image of the surface of an acidic gas adsorbent sheet of Example 1.
FIG. 6 is an SEM image of a cross-section of the acidic gas adsorbent sheet of Example 1.
FIG. 7 is an SEM image of the surface of an acidic gas adsorbent sheet of Example 2.
FIG. 8 is an SEM image of a cross-section of the acidic gas adsorbent sheet of Example 2.
FIG. 9 is an SEM image of the surface of an acidic gas adsorbent sheet of Example 3.
FIG. 10 is an SEM image of a cross-section of the acidic gas adsorbent sheet of Example 3.
FIG. 11 is an SEM image of the surface of an acidic gas adsorbent sheet of Example 4.
FIG. 12 is an SEM image of a cross-section of the acidic gas adsorbent sheet of Example 4.
FIG. 13 is an SEM image of the surface of an acidic gas adsorbent sheet of Example 5.
FIG. 14 is an SEM image of a cross-section of the acidic gas adsorbent sheet of Example 5.
FIG. 15 is an SEM image of the surface of an acidic gas adsorbent sheet of Comparative Example 1.
FIG. 16 is an SEM image of a cross-section of the acidic gas adsorbent sheet of Comparative Example 1.
FIG. 17 is an SEM image of the surface of an acidic gas adsorbent sheet of Comparative Example 2.
FIG. 18 is an SEM image of a cross-section of the acidic gas adsorbent sheet of Comparative Example 2.
FIG. 19 is an SEM image of the surface of an acidic gas adsorbent sheet of Comparative Example 3.
FIG. 20 is an SEM image of a cross-section of the acidic gas adsorbent sheet of Comparative Example 3.
FIG. 21 is an SEM image of the surface of an acidic gas adsorbent sheet of Comparative Example 4.
FIG. 22 is an SEM image of a cross-section of the acidic gas adsorbent sheet of Comparative Example 4.

DESCRIPTION OF EMBODIMENTS

A production method for an acidic gas adsorbent sheet according to a first aspect of the present invention includes:

a step (I) of, in a mixed solution including a compound C1 having a primary amino group, a compound C2 having an epoxy group, and a porogen and having an equivalent of the primary amino group greater than an equivalent of the epoxy group, reacting the compound C1 and the compound C2 to obtain a reaction product;
a step (II) of cooling the mixed solution including the reaction product, then adding the compound C2 to the mixed solution, and reacting the reaction product and the compound C2 to obtain a reaction solution;
a step (III) of curing the reaction solution to obtain a sheet-shaped cured body; and
a step (IV) of removing the porogen from the sheet-shaped cured body.

In a second aspect of the present invention, for example, in the production method for an acidic gas adsorbent sheet according to the first aspect, the cooling is performed to 10°C or lower.
In a third aspect of the present invention, for example, in the production method for an acidic gas adsorbent sheet according to the first or second aspect, the compound C1 includes an amine monomer.
In a fourth aspect of the present invention, for example, in the production method for an acidic gas adsorbent sheet according to any one of the first to third aspects, in the step (I), a ratio E/A of an equivalent (E) of the epoxy group relative to an equivalent (A) of active hydrogen of the primary amino group is 0.3 or less.
In a fifth aspect of the present invention, for example, in the production method for an acidic gas adsorbent sheet according to any one of the first to fourth aspects, with respect to the compound C1 and the compound C2 used until the step (II), a ratio E/A of an equivalent (E) of the epoxy group relative to an equivalent (A) of active hydrogen of the primary amino group is greater than 0.3 and less than 1.

In a sixth aspect of the present invention, for example, in the production method for an acidic gas adsorbent sheet according to any one of the first to fifth aspects, a viscosity at 25°C of the mixed solution including the reaction product is 10000 mPa·s or less.

In a seventh aspect of the present invention, for example, in the production method for an acidic gas adsorbent sheet according to any one of the first to sixth aspects, the step (III) includes bringing the reaction solution into contact with a sheet-shaped substrate and then curing the reaction solution in contact with the substrate, to obtain the sheet-shaped cured body.

In an eighth aspect of the present invention, for example, in the production method for an acidic gas adsorbent sheet according to the seventh aspect, the substrate includes a fiber structure.

In a ninth aspect of the present invention, for example, in the production method for an acidic gas adsorbent sheet according to the eighth aspect, the reaction solution is brought into contact with the substrate to cause the reaction solution to soak into the substrate.

An acidic gas adsorbent sheet according to a tenth aspect of the present invention is an acidic gas adsorbent sheet including a polymer having an amino group, wherein

when the following adsorption test A1 is performed, an adsorption amount of carbon dioxide from start of the test to 1 hour after the start of the test is greater than 0.4 mmol/g, and
when the following desorption test B1 is performed, a desorption rate of carbon dioxide is greater than 80%,
adsorption test A1: mixed gas composed of carbon dioxide, nitrogen, and water vapor is continuously fed into a container containing the acidic gas adsorbent sheet for 15 hours, wherein a concentration of the carbon dioxide in the mixed gas is 400 vol ppm, and the mixed gas has a temperature of 20°C and a humidity of 50%RH, and
desorption test B1: the acidic gas adsorbent sheet after the adsorption test A1 is performed is heated at 50°C for 15 hours while the mixed gas is continuously fed into the container.

In an eleventh aspect of the present invention, for example, the acidic gas adsorbent sheet according to the tenth aspect has a porous structure.

In a twelfth aspect of the present invention, for example, in the acidic gas adsorbent sheet according to the tenth or eleventh aspect, a skin layer at a surface of the acidic gas adsorbent sheet has a thickness of 0.48 μm or less.

In a thirteenth aspect of the present invention, for example, the acidic gas adsorbent sheet according to any one of the tenth to twelfth aspects further includes a substrate.

In a fourteenth aspect of the present invention, for example, in the acidic gas adsorbent sheet according to the thirteenth aspect, the substrate includes a fiber structure.

Hereinafter, details of the present invention will be described, but the following description is not intended to limit the present invention to specific embodiments.

[Production method for acidic gas adsorbent sheet]

A production method for an acidic gas adsorbent sheet according to a first embodiment of the present invention includes: a step (I) of, in a mixed solution including a compound C1 having a primary amino group, a compound C2 having an epoxy group, and a porogen and having an equivalent of the primary amino group greater than an equivalent of the epoxy group, reacting the compound C1 and the compound C2 to obtain a reaction product; a step (II) of cooling the mixed solution including the obtained reaction product, then adding the compound C2 to the mixed solution, and reacting the reaction product obtained in the step (I) and the compound C2 to obtain a reaction solution; a step (III) of curing the reaction solution to obtain a sheet-shaped cured body; and a step (IV) of removing the porogen from the sheet-shaped cured body.

<Step (I)>

The step (I) will be described in detail. As described above, the mixed solution includes the compound C1 having a primary amino group, the compound C2 having an epoxy group, and the porogen and has an equivalent of the primary amino group greater than an equivalent of the epoxy group. The compound C1 includes an amine monomer, for example. Hereinafter, the mixed solution is sometimes referred to as "mixed solution L".

The amine monomer is a monomer including at least one primary amino group. The number of primary amino groups included in the amine monomer is preferably 2 or more, may be 3 or more, or may be 4 or more. The upper limit value of the number of primary amino groups is not limited in particular, is, for example, 100, and may be 10. The amine monomer may include a secondary amino group and a tertiary amino group in addition to the primary amino group. The molecular weight of the amine monomer is not limited in particular, is, for example, 100 or more, and may be 200 or more, 300 or more, 500 or more, 1000 or more, or even 1500 or more. The upper limit value of the molecular weight of the amine monomer is not limited in particular, and is, for example, 10000, and may be 5000. The molecular weight of the amine monomer is less than 1000 and preferably 500 or less, depending on the case. The ratio of the number of primary amino groups relative to the number of all amino groups in the amine monomer is not limited in particular, is, for example, 10% or more, preferably 20% or more, and more preferably 30% or more, and may be 40% or more. The upper limit value of this ratio is not limited in particular, is, for example, 80%, and may be 60%. The molecular weight of the amine monomer is not limited in particular, is, for example, less than 5000, and may be preferably 3000 or less, 1000 or less, or 500 or less. The molecular weight of the amine monomer is, for example, 50 or more, preferably 100 or more, and more preferably 150 or more.

Examples of the amine monomer include: aliphatic amines such as ethylamine, ethylenediamine, 1,4-butylenediamine, 1,5-pentanediamine, 1,6-hexanediamine, 1,7-heptanediamine, 1,8-octanediamine, diethylenetriamine, triethylenetetramine, tetraethylenepentamine, imino-bis-propylamine, bis(hexamethylene)triamine, 1,3,6-trisaminomethylhexane, tris(2-aminoethyl)amine, N,N'-bis(3-aminopropyl)ethylenediamine, polymethylenediamine, trimethylhexamethylenediamine, and polyetherdiamine; alicyclic amines such as isophoronediamine, menthanediamine, piperazine, N-aminoethylpiperazine, 3,9-bis(3-aminopropyl)-2,4,8,10-tetraoxaspiro(5,5)undecane adduct, bis(4-amino-3-methylcyclohexyl)methane, and bis(4-aminocyclohexyl)methane, and modified products of these; aliphatic polyamines such as polyethyleneimine and polyalkylene polyamine; (meth)acrylic polymers having an amino group such as aminoethylated acrylic polymer; aliphatic polyamideamines formed through reaction between polyamines and a dimer acid; and the like. The amine monomer preferably includes an aliphatic amine (especially, triethylenetetramine (TETA)) or an aliphatic polyamine (especially, polyethyleneimine (PEI)). The amine monomer can be used alone, or two types or more thereof may be used in combination.

The compound C2 includes an epoxy monomer, for example.

The epoxy monomer includes at least one epoxy group. The number of epoxy groups included in the epoxy monomer is preferably 2 or more and may be 3 or more, or may be 4 or more. The upper limit value of the number of epoxy groups included in the epoxy monomer is not limited in particular, is, for example, 100, and may be 10. The molecular weight of the epoxy monomer is not limited in particular, and is, for example, less than 1000 and preferably 500 or less. The molecular weight of the epoxy monomer may be 1000 to 50000, depending on the case.

Examples of the epoxy monomer include: monofunctional epoxy compounds such as n-butyl glycidyl ether, higher alcohol glycidyl ether, allyl glycidyl ether, 2-ethylhexyl glycidyl ether, phenyl glycidyl ether, cresyl glycidyl ether, p-sec-butylphenyl glycidyl ether, and t-butylphenyl glycidyl ether; diepoxy alkanes such as 1,5-hexadiene diepoxide, 1,7-octadiene diepoxide, and 1,9-decadiene diepoxide; ether group-containing polyfunctional epoxy compounds such as (poly)ethylene glycol diglycidyl ether, (poly)propylene glycol diglycidyl ether, 1,4-butanediol diglycidyl ether, neopentyl glycol diglycidyl ether, 1,6-hexanediol diglycidyl ether, trimethylolpropane polyglycidyl ether, pentaerythritol tetraglycidyl ether, glycerol polyglycidyl ether, and sorbitol polyglycidyl ether; and amino group-containing polyfunctional epoxy compounds such as N,N,N',N'-tetraglycidyl-m-xylenediamine and 1,3-bis(N,N-diglycidylaminomethyl)cyclohexane.

The epoxy monomer may be an aromatic epoxy resin, a non-aromatic epoxy resin, or the like. Examples of the aromatic epoxy resin include a polyphenyl-based epoxy resin, an epoxy resin including a fluorene ring, an epoxy resin including triglycidyl isocyanurate, an epoxy resin including a hetero aromatic ring (e.g., triazine ring), and the like. Examples of the polyphenyl-based epoxy resin include bisphenol A type epoxy resin, brominated bisphenol A type epoxy resin, bisphenol F type epoxy resin, bisphenol AD type epoxy resin, stilbene type epoxy resin, biphenyl type epoxy resin, bisphenol A novolak type epoxy resin, cresol novolak type epoxy resin, diaminodiphenylmethane type epoxy resin, tetrakis(hydroxyphenyl)ethane-based epoxy resin, and the like. Examples of the non-aromatic epoxy resin include aliphatic glycidyl ether type epoxy resin, aliphatic glycidyl ester type epoxy resin, alicyclic glycidyl ether type epoxy resin, alicyclic glycidyl amine type epoxy resin, alicyclic glycidyl ester type epoxy resin, and the like. The epoxy monomer can be used alone, or two types or more thereof may be used in combination.

The epoxy monomer preferably includes at least one selected from the group consisting of a diepoxyalkane, an ether group-containing polyfunctional epoxy compound, and an amino group-containing polyfunctional epoxy compound. As the epoxy monomer, a diepoxyalkane or an ether group-containing polyfunctional epoxy compound and an amino group-containing polyfunctional epoxy compound may be used in combination. Specific examples of preferable epoxy monomers include 1,7-octadiene diepoxide (ODE), ethylene glycol diglycidyl ether (EDE), 1,3-bis(N,N-diglycidylaminomethyl)cyclohexane, N,N,N',N'-tetraglycidyl-m-xylenediamine, and the like. When a monofunctional epoxy compound is used, the monofunctional epoxy compound is preferably used in combination with another epoxy monomer including two or more epoxy groups. The monofunctional epoxy compound can also be utilized as a reactive diluent for adjusting the viscosity of the mixed solution L.

The porogen is, for example, a solvent that can dissolve the monomers included in the mixed solution L and further can cause reaction-induced phase separation after the compound C1 and the compound C2 react. Specific examples of the porogen include: cellosolves such as methyl cellosolve and ethyl cellosolve; esters such as ethylene glycol monomethyl ether acetate and propylene glycol monomethyl ether acetate; glycols such as polyethylene glycol, polypropylene glycol, and polyoxyalkylene glycols; and ethers such as polyoxyethylene monomethyl ether and polyoxyethylene dimethyl ether. Specific examples of polyoxyalkylene glycols include poly(1,2-butanediol)-6 propylene glycol, polyoxypropylene glyceryl ether, and the like. The porogen may be a polar solvent such as ethyl acetate, N,N-dimethylformamide (DMF), acetonitrile, ethanol, and isopropanol, a non-polar solvent such as toluene, or a mixed solvent of these solvents. The porogen can be used alone, or two types or more thereof may be used in combination.

As described above, in the step (I), the mixed solution L has an equivalent of the primary amino group greater than an equivalent of the epoxy group. Specifically, in the step (I), the blending ratio between the compound C1 and the compound C2 in the mixed solution L is adjusted such that the equivalent of the primary amino group is greater than the equivalent of the epoxy group.

In the step (I), the ratio E/A of an equivalent (E) of the epoxy group relative to an equivalent (A) of active hydrogen of the primary amino group in the mixed solution L may be 0.3 or less. The ratio E/A in the mixed solution L is preferably 0.2 or less and may be 0.16 or less, 0.12 or less, or even 0.05 or less. The lower limit value is not limited, and is, for example, 0.01 or more.

As described above, in the step (I), the compound C1 and the compound C2 in the mixed solution L are reacted to obtain a reaction product. Hereinafter, the reaction product obtained in the step (I) is sometimes referred to as "reaction product P1". As the reaction proceeds, the reaction product P1 is formed in the mixed solution L. An example of the reaction product P1 is an amine polymer including a constitutional unit derived from an epoxy monomer. Specifically, the reaction product P1 may be a polymer of a monomer group including an amine monomer and an epoxy monomer (in particular, a polymer of an amine monomer and an epoxy monomer).

As described above, in the step (I), the equivalent of the primary amino group is greater than the equivalent of the epoxy group, and the ratio E/A is preferably 0.3 or less. One primary amino group includes two active hydrogens. Therefore, when the ratio E/A is 0.3 or less, there are normally many primary amino groups in the reaction product P1.

The reaction of the compound C1 and the compound C2 can be carried out, for example, by applying energy to the mixed solution L. The energy applied to the mixed solution L is preferably thermal energy. As an example, the reaction in the step (I) can be caused to proceed by heating the mixed solution L. That is, it is preferable that the step (I) is performed under heating. The heating temperature of the mixed solution L is not limited in particular and may be, for example, 40°C to 100°C, or 50°C to 80°C. The heating time of the mixed solution L is not limited in particular and is, for example, 30 minutes to 5 hours. The heating of the mixed solution L may be performed while stirring the mixed solution L. The energy applied to the mixed solution L may be light energy. In the step (I), it is preferable to completely react the compound C1 and the compound C2 in the mixed solution L.

The viscosity at 25°C of the mixed solution L including the reaction product P1 may be 10000 mPa·s or less. The viscosity of the mixed solution L including the reaction product P1 is preferably 7500 mPa·s or less and may be 5000 mPa·s or less, 4200 mPa·s or less, 4000 mPa·s or less, 3500 mPa·s or less, 3000 mPa·s or less, or even 2700 mPa·s or less. The lower limit value is not limited and may be, for example, 500 mPa·s or less, or 1000 mPa·s or less. The viscosity is measured while stirring the mixed solution L including the reaction product P1 at a shear rate of $1\ s^{-1}$. If the reaction in the step (I) is carried out by heating to, for example, 60°C, the mixed solution L including the reaction product P1 after the reaction is cooled, and the viscosity is measured.

Components other than the compound C1, the compound C2, and the porogen may be further added to the mixed solution L. Examples of the other components include a reaction accelerator and the like. Examples of the reaction accelerator include: tertiary amines such as triethylamine and tributylamine; and imidazoles such as 2-phenol-4-methylimidazole, 2-ethyl-4-methylimidazole, and 2-phenol-4,5-dihydroxyimidazole. These reaction accelerators can accelerate reaction for synthesizing the reaction product P1, for example. For example, it is preferable that the mixed solution L does not include porous particles of alumina or the like, and a binding agent for binding the porous particles, as other components.

<Step (II)>

The step (II) will be described in detail. In the step (II), the mixed solution L including the reaction product P1 is cooled, then the compound C2 is further added to the mixed solution L, and the reaction product P1 and the compound C2 are reacted to obtain a reaction solution. Hereinafter, the reaction solution obtained in the step (II) is sometimes referred to as "reaction solution P2". The mixed solution L including the reaction product P1 may be cooled to 10°C or lower, and may be preferably cooled to 4°C or lower.

In the step (II), the active hydrogen of a primary amine remaining in the reaction product P1 reacts with the compound C2. The reaction of the reaction product P1 and the compound C2 may be a crosslinking reaction of the reaction product P1 with an epoxy monomer. In the reaction solution P2 obtained in the step (II), some compound C2 remains, and in the step (III) described later, the reaction product included in the reaction solution P2 reacts with the remaining compound C2.

The reaction solution P2 includes, for example, an amine polymer including a constitutional unit derived from an epoxy monomer. Specifically, the reaction solution P2 may include a polymer of a monomer group including an amine monomer and an epoxy monomer (in particular, a polymer of an amine monomer and an epoxy monomer).

The addition of the compound C2 may be carried out multiple times. The compound C2 to be added may be cooled to 10°C or lower, preferably 4°C or lower. The reaction in the step (II) may be carried out while stirring the mixed solution L to which the compound C2 has been added. The temperature of the mixed solution L when the step (II) is started may be a temperature lower than room temperature, and may be, for example, 10°C or lower.

With respect to the compound C1 and the compound C2 used until the step (II), the ratio E/A may be greater than 0.3 and less than 1. That is, with respect to the compound C1 and the compound C2 used until the reaction solution P2 is obtained, the ratio E/A may be greater than 0.3 and less than 1. The ratio E/A is preferably 0.4 or more and may be more preferably 0.5 or more. The ratio E/A is preferably 0.8 or less and may be 0.7 or less, more preferably 0.6 or less, and further preferably 0.5 or less. With respect to the compound C1 and the compound C2 used until the step (II), the ratio E/A may be 0.5. When the ratio E/A is less than 1, a secondary amino group normally exists in the reaction product included in the reaction solution P2. The secondary amino group is a functional group suitable for appropriately adjusting the acidic gas adsorption and desorption ability of an adsorbent sheet.

<Step (III)>

The step (III) will be described in detail. As described above, in the step (III), the reaction solution P2 is cured to obtain a sheet-shaped cured body. Hereinafter, the cured body obtained in the step (III) is sometimes referred to as "cured body B". The curing of the reaction solution P2 proceeds as the reaction product included in the reaction solution P2 reacts with the remaining compound C2.

In the step (III), the reaction solution P2 may be brought into contact with a sheet-shaped substrate, and then the reaction solution P2 may be cured to obtain the sheet-shaped cured body B.

In the step (II), as the reaction of the reaction product P1 and the compound C2 proceeds, the temperature of the reaction solution P2 tends to increase. For example, in the step (III), the reaction solution P2 is brought into contact with the sheet-shaped substrate when the temperature of the reaction solution P2 reaches 20°C to 35°C in the step (II).

Examples of the substrate include a fiber structure including a fiber, a mesh, a foam, a non-porous sheet, a foil, and the like. Examples of the fiber include: glass fibers; natural fibers such as wood pulp, cotton, and hemp (e.g., Manila hemp); and chemical fibers (synthetic fibers) such as polyester fiber, rayon, vinylon, acetate fiber, polyvinyl alcohol (PVA) fiber, polyamide fiber, polyolefin fiber, and polyurethane fiber. Examples of the fiber structure include a woven fabric, a nonwoven fabric, paper, and the like. A specific example of the fiber structure is glass paper. The substrate may include a fiber structure. The thickness of the substrate is not limited in particular, is, for example, 1 $\mu$m to 500 $\mu$m, and may be 100 $\mu$m to 300 $\mu$m.

In the step (III), the reaction solution P2 may be brought into contact with a substrate including a fiber structure to cause the reaction solution P2 to soak into the substrate, and then the reaction solution P2 may be cured to obtain the sheet-shaped cured body B.

The reaction solution P2 may be brought into contact with the substrate by immersing the reaction solution P2 in the substrate, or by applying the reaction solution P2 to the substrate using a roll coating method, a spin coating method, or the like.

The cured body B includes a polymer and a porogen resulting from the reaction of the compound C1 and the compound C2. In the cured body B, a co-continuous structure is formed by phase separation of the polymer and the porogen.

<Step (IV)>

In the step (IV), the porogen is removed from the sheet-shaped cured body B. The method of removing the porogen from the sheet-shaped cured body B is not limited in particular. For example, the porogen may be extracted and removed from the cured body B by immersing the cured body B in a solvent. As the solvent for extracting the porogen, water, aliphatic hydrocarbon solvents, aromatic hydrocarbon solvents, aliphatic alcohol solvents, ether solvents, halogen-containing organic solvents, ester solvents, and the like can be used. Examples of aliphatic hydrocarbon solvents include n-hexane, cyclohexane, methylcyclohexane, n-heptane, n-octane, isooctane, petroleum ether, benzine, and the like. Examples of aromatic hydrocarbon solvents include toluene, xylene, mesitylene, benzene, and the like. Examples of aliphatic alcohol solvents include methanol, ethanol, isopropanol, butanol, cyclohexanol, ethylene glycol, propylene glycol, propylene glycol monomethyl ether, diethylene glycol, and the like. Examples of ether solvents include diethyl ether, diisopropyl ether, dibutyl ether, ethylene glycol dimethyl ether, ethylene glycol diethyl ether, propylene glycol dimethyl ether, propylene glycol diethyl ether, diethylene glycol dimethyl ether, tetrahydrofuran, dioxane, anisole, and the like. Examples of halogen-containing organic solvents include dichloromethane, chloroform, carbon tetrachloride, dichloroethane, chlorobenzene, and the like. Examples of ester solvents include ethyl acetate and the like. These solvents can be used individually, or two types or more thereof may be used in combination.

In the step (IV), by removing the porogen from the sheet-shaped cured body B, for example, an acidic gas adsorbent sheet having a porous structure can be obtained.

When producing the sheet-shaped cured body B, heat is more easily transmitted to the vicinity of the surface of the reaction solution P2 than to the interior of the reaction solution P2. Therefore, for example, if the mixed solution including the compounds C1 and C2 is cured without performing the above steps (I) and (II), it is considered that the reaction of these compounds preferentially proceeds in the vicinity of the surface of the mixed solution, and as a result, a dense layer is likely to be formed at the surface of the acidic gas adsorbent sheet. In the production method according to the first embodiment, since the step (I) and the step (II) are included, the reaction of the compound C1 and the compound C2 can be caused to appropriately proceed until the sheet-shaped cured body B is produced, so that a polymerization ratio that allows phase separation even in the vicinity of the surface of the sheet-shaped cured body B, to which heat is easily transmitted, is reached, and phase separation is more likely to occur. Therefore, by removing the porogen, an acidic gas adsorbent sheet having a porous structure even in the vicinity of the surface thereof can be obtained. With the production method of the present embodiment, an acidic gas adsorbent sheet having no dense layer existing at the surface thereof or having a thin dense layer at the surface thereof can be obtained.

The acidic gas adsorbent sheet obtained by the production method according to the first embodiment of the present invention may have a porous structure including pores derived from a three-dimensional network skeleton, and the three-dimensional network skeleton may include a polymer having an amino group.

[Acidic gas adsorbent sheet]

An acidic gas adsorbent sheet according to a second embodiment of the present invention is an acidic gas adsorbent sheet including a polymer having an amino group. With respect to the acidic gas adsorbent sheet according to the second embodiment, when the following adsorption test A1 is performed, an adsorption amount of carbon dioxide from the start of the test to 1 hour after the start of the test is greater than 0.4 mmol/g, and when the following desorption test B1 is performed, a desorption rate of carbon dioxide is greater than 80%.

Adsorption test A1: Mixed gas composed of carbon dioxide, nitrogen, and water vapor is continuously fed into a container containing the acidic gas adsorbent sheet for 15 hours. Here, the concentration of the carbon dioxide in the mixed gas is 400 vol ppm, and the mixed gas has a temperature of 20°C and a humidity of 50%RH.

Desorption test B1: The acidic gas adsorbent sheet after the adsorption test A1 is performed is heated at 50°C for 15 hours while the mixed gas is continuously fed into the above container.

Hereinafter, the polymer having an amino group is sometimes referred to as "polymer P". The polymer P will be described in detail later.

The acidic gas adsorbent sheet according to the second embodiment may further include a substrate. Examples of the substrate include those described above in the first embodiment. The substrate may include a fiber structure.

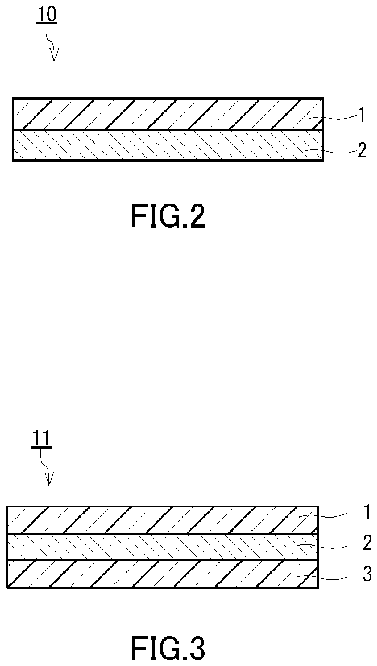

FIG. 2 is a cross-sectional view schematically showing an example of the acidic gas adsorbent sheet according to the second embodiment. An acidic gas adsorbent sheet 10 is a sheet in which a resin sheet 1 including the polymer P and a substrate 2 are stacked. The resin sheet 1 may be substantially composed of the polymer P. The acidic gas adsorbent sheet 10 may include: a substrate 2 composed of a fiber structure; and the polymer P that has entered voids of the substrate 2. In the acidic gas adsorbent sheet 10, a resin sheet 1 including the polymer P and a substrate 2 composed of a fiber structure may be stacked, and at least a part of the resin sheet 1 may enter voids of the substrate 2 composed of a fiber structure. That is, the resin sheet 1 and the substrate 2 may be combined. The acidic gas adsorbent sheet 10 may include a plurality of resin sheets 1.

FIG. 3 is a cross-sectional view schematically showing a modification of the acidic gas adsorbent sheet according to the second embodiment. An acidic gas adsorbent sheet 11 is a sheet in which a resin sheet 1 including the polymer P, a substrate 2, and a resin sheet 3 including the polymer P are stacked. At least parts of the resin sheet 1 and the resin sheet 3 may enter voids of the substrate 2 composed of a fiber structure. That is, the resin sheet 1 and the substrate 2 may be combined, and the resin sheet 3 and the substrate 2 may be combined.

The composition and structure of the resin sheet 3 may be the same as or different from that of the resin sheet 1. In the present description, when simply referring to "resin sheet", both the resin sheet 1 and the resin sheet 3 are included in the resin sheet.

The acidic gas adsorbent sheet according to the second embodiment may have a porous structure. The porous structure may include pores derived from a three-dimensional network skeleton. That is, the acidic gas adsorbent sheet according to the second embodiment may be an acidic gas adsorbent sheet having a porous structure including pores derived from a three-dimensional network skeleton, and the three-dimensional network skeleton may include a polymer having an amino group.

The pores derived from the three-dimensional network skeleton have a size that allows the pores to be observed, for example, when observed using a scanning electron microscope (SEM) at a magnification of 5000 times.

At the surface of the acidic gas adsorbent sheet according to the second embodiment, the thickness of a skin layer may be 0.48 $\mu$m or less. That is, at the surface of the resin sheet, the thickness of the skin layer may be 0.48 $\mu$m or less. In the present description, the skin layer is a dense layer at the surface of the acidic gas adsorbent sheet, and means a layer in which pores cannot be confirmed when a cross-section of the acidic gas adsorbent sheet is observed at a magnification of 5000 times using an SEM, for example. The thickness of the skin layer is preferably 0.4 $\mu$m or less and may be 0.3 $\mu$m or less, 0.2 $\mu$m or less, 0.1 $\mu$m or less, or even 0 $\mu$m. The lower limit value of the thickness of the skin layer is not limited in particular and is, for example, 0 $\mu$m or more. The acidic gas adsorbent sheet according to the second embodiment may not necessarily have a skin layer at the surface thereof.

Since the acidic gas adsorbent sheet according to the second embodiment has a thin skin layer or has no skin layer, acidic gas easily diffuses into the interior of the adsorbent sheet, and the adsorbent sheet can have improved ability to adsorb and desorb acidic gas. In particular, the adsorbent sheet can quickly adsorb acidic gas.

The thickness of the acidic gas adsorbent sheet according to the second embodiment is, for example, 1000 $\mu$m or less, preferably 500 $\mu$m or less, and more preferably 300 $\mu$m or less. The lower limit value of the thickness of the acidic gas adsorbent sheet according to the second embodiment is not limited in particular and is, for example, 10 $\mu$m.

<Polymer P>

The polymer P includes, as the amino group, at least one selected from the group consisting of a primary amino group, a secondary amino group, and a tertiary amino group, for example. From the viewpoint of the acidic gas adsorption ability, the polymer P preferably includes at least one selected from the group consisting of a primary amino group and a secondary amino group, and particularly preferably includes a secondary amino group. In other words, the amino group of the polymer P preferably includes a secondary amino group. The polymer P having a secondary amino group also has a tendency of easily desorbing the adsorbed acidic gas. That is, in the case of the polymer P having a secondary amino group, a regeneration process of the acidic gas adsorbent sheet 10 can be performed under a relatively mild condition. The polymer P may include a tertiary amino group, but does not have to include any tertiary amino group.

The weight ratio of nitrogen element in the polymer P is, for example, 5 wt% or more and preferably 10 wt% or more. The higher this weight ratio is, the more the acidic gas adsorption ability of the acidic gas adsorbent sheet 10 tends to be improved. The upper limit value of the weight ratio of nitrogen element in the polymer P is not limited in particular, and is 30 wt%, for example. When all nitrogen element included in the polymer P is derived from the amino group, the above weight ratio of nitrogen element can be regarded as the weight ratio of the amino group in the polymer P.

The density of the amino group in the polymer P is, for example, 1 mmol/g or more, preferably 5 mmol/g or more, and more preferably 10 mmol/g or more. The upper limit value of the density of the amino group is not limited in particular, and is 30 mmol/g, for example. In the present description, the density of the amino group in the polymer P means the amount of substance of the amino group included in 1 g of the polymer P.

The polymer P may include another functional group other than the amino group. Examples of the other functional group include a hydroxyl group, an ether group, an ester group, an amide group, and the like. It is preferable that the polymer P includes an ether group as another functional group.

The polymer P is, for example, an amine polymer including a constitutional unit U1 derived from an epoxy monomer. This amine polymer includes, for example, at least one selected from the group consisting of reaction products of a compound group including an amine monomer and an epoxy monomer, and is preferably the above reaction product. The reaction product not only tends to have a high density of nitrogen element but also tends to have high heat resistance and moisture heat resistance.

The monomer group for forming the above polymer includes an amine monomer and an epoxy monomer as described above, and is preferably composed of only these monomers. That is, the above polymer is preferably a polymer of an amine monomer and an epoxy monomer.

Examples of the amine monomer include those described above in the first embodiment. Examples of the epoxy monomer include those described above in the first embodiment.

As described above, the polymer P as an amine polymer includes the constitutional unit U1 derived from an epoxy monomer. When the polymer P is this polymer, the polymer P further includes a constitutional unit U2 derived from an amine monomer. The content of the constitutional unit U1 in the polymer P, in particular, the polymer, is 20 wt% to 70 wt%, for example. The content of the constitutional unit U2 in the polymer P, in particular, the polymer, is, for example, 30 wt% or more and preferably 50 wt% or more. The upper limit value of the content of the constitutional unit U2 is not limited in particular, and is 80 wt%, for example.

The glass transition temperature Tg of the polymer P is not limited in particular, is, for example, 40°C or less, preferably 30°C or less, more preferably 20°C or less, and further preferably 15°C or less, and may be 10°C or less, may be 5°C or less, or may be 0°C or less. When the glass transition temperature Tg of the polymer P is low to this extent, the speed at which acidic gas is adsorbed by the acidic gas adsorbent sheet tends to be high. From the viewpoint of sufficiently ensuring the acidic gas adsorption and desorption ability of the acidic gas adsorbent sheet and from the viewpoint of heat resistance, the lower limit value of the glass transition temperature Tg of the polymer P is, for example, -100°C, preferably -50°C, and more preferably -10°C. In the present description, the glass transition temperature Tg means the midpoint glass transition temperature ($T_{mg}$) obtained according to the standards of JIS K7121:1987. Normally, the polymer P corresponds to a thermosetting resin. The polymer P is solid, for example, at 25°C, preferably in the range of 25°C to 80°C.

The weight average molecular weight of the polymer P is not limited in particular, and is, for example, 500 or more, preferably 1000 or more, more preferably 10000 or more, and further preferably 100000 or more. The upper limit value of the weight average molecular weight of the polymer P is, for example, 10000000.

<Resin sheets 1 and 3>

The resin sheet includes, for example, the polymer P as a main component. In the present description, the "main component" means a component most included on a weight basis in the resin sheet. The content of the polymer P in the resin sheet is, for example, 50 wt% or more, preferably 70 wt% or more, and more preferably 90 wt% or more, and may be 95 wt% or more, or may be 99 wt% or more. The resin sheet may be substantially composed of only the polymer P. The higher the content of the polymer P is, the more the acidic gas adsorption ability of the acidic gas adsorbent sheet tends to be improved.

The resin sheet may include other materials other than the polymer P. Examples of the other materials include a reaction accelerator, a plasticizer, a filler, a pigment, a dye, an anti-aging agent, a conductive material, an antistatic agent, an ultraviolet absorber, a flame retardant, an antioxidant, and the like. Examples of the reaction accelerator include those described above in the first embodiment.

Examples of the filler include a fiber, a fiber structure including a fiber, and the like. Examples of the fiber include: glass fibers; natural fibers such as wood pulp, cotton, and hemp (e.g., Manila hemp); and chemical fibers (synthetic fibers) such as polyester fiber, rayon, vinylon, acetate fiber, polyvinyl alcohol (PVA) fiber, polyamide fiber, polyolefin fiber, and polyurethane fiber. Examples of the fiber structure include a woven fabric, a nonwoven fabric, paper, and the like. A specific example of the fiber structure is glass paper.

The resin sheet may have a porous structure, and the porous structure may include pores derived from a three-dimensional network skeleton. The three-dimensional network skeleton includes the polymer P having an amino group. In other words, the resin sheet may be a porous resin sheet including the polymer P. The above three-dimensional network skeleton is typically composed only of the polymer P. In the resin sheet, for example, the above three-dimensional network skeleton extends continuously. The pores included in the resin sheet are, for example, continuous holes formed continuously in a three-dimensional manner. The resin sheet may have independent holes, or may have through holes penetrating the resin sheet. When the resin sheet includes a fiber structure as a filler, the porous structure of the resin sheet may further have pores derived from the fiber structure. For example, it is preferable that the resin sheet does not have a fiber including the polymer P, and it is preferable that the resin sheet is not a nonwoven fabric including such a fiber. That is, in the second embodiment, the resin sheet excludes, for example, a nonwoven fabric having a fiber including the polymer P.

When the resin sheet includes a fiber structure as a filler, the three-dimensional network skeleton including the polymer P and the fiber structure may exist independently of each other in the resin sheet. In this case, the porous structure of the resin sheet further has, for example, pores derived from the fiber structure together with the pores derived from the three-dimensional network skeleton including the polymer P. In this case, in the resin sheet, the three-dimensional network skeleton including the polymer P and the fiber structure can be regarded as being combined.

The thickness of the resin sheet 1 is, for example, 500 μm or less, preferably 200 μm or less, and more preferably 100 μm or less. The lower limit value of the thickness of the resin sheet 1 is not limited in particular and is, for example, 10 μm. The thickness of the resin sheet 3 is the same as that of the resin sheet 1. The smaller the thickness of the resin sheet is, the larger the cross-sectional area of of the air flow path of a structure, in particular, a honeycomb structure, produced using the acidic gas adsorbent sheet 10, can be adjusted, for example. A structure having an air flow path with a large cross-sectional area is suitable for reducing the pressure loss that occurs, for example, when in contact with acidic gas.

The specific surface area of the resin sheet is not limited in particular, and is, for example, 0.1 $m^2/g$ or more, preferably 1.0 $m^2/g$ or more, and more preferably 2.0 $m^2/g$ or more. The upper limit value of the specific surface area of the resin sheet is not limited in particular, and is 10 $m^2/g$, for example. The specific surface area of the resin sheet means the BET (Brunauer-Emmett-Teller) specific surface area in terms of nitrogen gas adsorption. The BET specific surface area can be measured by a method conforming to the standards of JIS Z8830: 2013.

The porosity of the resin sheet is, for example, 20% or more, preferably 30% or more, and more preferably 40% or more. The upper limit value of the porosity of the resin sheet is not limited in particular, is, for example, 80%, and may be 60%. The porosity of the resin sheet can be calculated by the following formula on the basis of a volume V ($cm^3$), a weight W (g), and a true density D ($g/cm^3$) of the resin sheet. The true density D means the specific gravity of the material forming the resin sheet.

$$\text{Porosity (\%)} = 100 \times (V - (W/D))/V$$

<Adsorption test and desorption test>

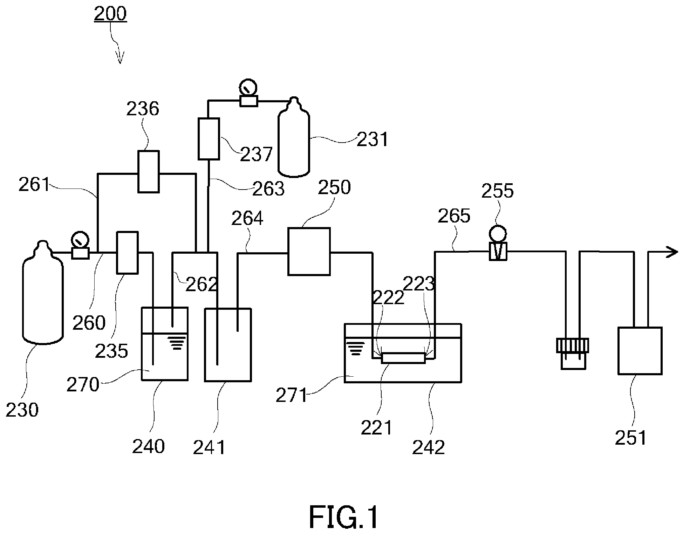

In the following, the adsorption test A1 and the desorption test B1 will be described in detail. In the adsorption test A1 and the desorption test B1, measurement can be performed using a measurement device 200 shown in FIG. 1, for example. The measurement device 200 includes a first tank 230 and a second tank 231. As an example, the first tank 230 stores dry-state nitrogen, and the second tank 231 stores mixed gas of dry-state nitrogen and dry-state carbon dioxide. The concentration of carbon dioxide in the mixed gas in the second tank 231 is 5 vol%, for example.

The measurement device 200 further includes a first container 240 containing water 270, and a first path 260 for sending nitrogen from the first tank 230 to the first container 240. The first path 260 has one end connected to a gas outlet of the first tank 230, and the other end disposed in the water 270 in the first container 240. Nitrogen sent from the first tank 230 to the first container 240 is humidified by coming into contact with the water 270. On the first path 260, a massflow controller 235 for adjusting the flow rate of nitrogen that is sent from the first tank 230 to the first container 240 is disposed.

The measurement device 200 further includes a second container 241, a second path 262, and a bypass path 261. The second path 262 connects the first container 240 and the second container 241 to each other. Nitrogen sent to the first container 240 and humidified is sent through the second path 262 to the second container 241. The bypass path 261 is branched from the first path 260 at a position between the first tank 230 and the massflow controller 235 and is connected to the second path 262. A part of the nitrogen sent from the first tank 230 flows into the bypass path 261 and is sent through the second path 262 to the second container 241. On the bypass path 261, a massflow controller 236 for adjusting the flow rate of nitrogen that is sent from the first tank 230 to the bypass path 261 is disposed.

The measurement device 200 further includes a third path 263 for sending the mixed gas from the second tank 231 to the second path 262. The third path 263 has one end connected to a gas outlet of the second tank 231 and the other end connected to the second path 262. On the third path 263, a massflow controller 237 for adjusting the flow rate of the mixed gas that is sent from the second tank 231 to the second path 262 is disposed. The mixed gas sent to the second path 262 is sent through the second path 262 to the second container 241.

The measurement device 200 further includes a third container 242 and a fourth path 264. The third container 242 contains water 271 and an adsorption part 221 disposed in the water 271. In the third container 242, the temperature of the water 271 is maintained at 20°C. The adsorption part 221 has a gas inlet 222 and a gas outlet 223. The adsorption part 221 serves as a container containing the acidic gas adsorbent sheet therein. The adsorption part 221 is configured such that the water 271 does not permeate therein. Typically, the adsorption part 221 is a tube composed of a hydrophobic resin, e.g., a fluorine resin such as tetrafluoroethylene-perfluoroalkoxyethylene copolymer (PFA). As an example, the tube as the adsorption part 221 has an inner diameter of 4 mm and an outer diameter of 6 mm. The adsorption part 221 is configured to be attachable to/detachable from the measurement device 200.

The measurement device 200 can also be used as an acidic gas adsorption device including the adsorption part 221. The present invention provides, in another aspect thereof, an acidic gas adsorption device including the adsorption part 221 having the gas inlet 222 and the gas outlet 223, wherein the adsorption part 221 contains the acidic gas adsorbent sheet.

The fourth path 264 connects the second container 241 and the third container 242 to each other. Specifically, the fourth path 264 is connected to the gas inlet 222 of the adsorption part 221 in the third container 242. In the fourth path 264, a first concentration meter 250 for measuring the concentration of carbon dioxide in the gas that is supplied to the adsorption part 221 is disposed. As the first concentration meter 250, for example, a CO2/H2O gas analyzer, LI-850-3, manufactured by LI-COR, Inc., can be used.

The measurement device 200 further includes a fifth path 265 connected to the gas outlet 223 of the adsorption part 221 and for discharging gas from the adsorption part 221 to the outside of the measurement device 200. On the fifth path 265, a back pressure valve 255 and a second concentration meter 251 are disposed. The back pressure valve 255 allows the pressure in the adsorption part 221 to be adjusted to a constant value. The second concentration meter 251 can measure the concentration of carbon dioxide in the gas that is discharged from the adsorption part 221. As the second concentration meter 251, for example, a CO2/H2O gas analyzer, LI-850-3, manufactured by LI-COR, Inc., can be used.

Each path of the measurement device 200 is composed of a metal-made or resin-made pipe, for example.

(Pretreatment)

First, the acidic gas adsorbent sheet is prepared, and a drying process is performed thereon. The drying process is performed by processing the acidic gas adsorbent sheet for two hours or more under a condition of 60°C, in a vacuum atmosphere, for example. Next, in a dry room having a dew point of about -60°C, the adsorption part 221 is filled with the acidic gas adsorbent sheet having been subjected to the drying process. For example, the adsorption part 221 is filled with 50 mg of the acidic gas adsorbent sheet. Next, the fourth path 264 and the fifth path 265 are connected to both ends of the adsorption part 221, and the adsorption part 221 is immersed in the water 271 in the third container 242.

Next, nitrogen from the first tank 230 and the mixed gas from the second tank 231 are supplied to the second container 241 through the first path 260, the second path 262, the bypass path 261, and the third path 263 of the measurement device 200. In the second container 241, these gases are mixed, and the mixed gas G composed of carbon dioxide, nitrogen, and water vapor is obtained. In the second container 241, the concentration of carbon dioxide in the mixed gas G is adjusted to 400 vol ppm. The mixed gas G has a temperature of 20°C and a humidity of 50%RH. The mixed gas G is supplied to the adsorption part 221 through the fourth path 264, at a sufficient flow rate with respect to the weight of the acidic gas adsorbent sheet, e.g., at a flow rate of 300 mL/min with respect to 50 mg of the acidic gas adsorbent sheet. In the adsorption part 221, the pressure of the mixed gas G is adjusted by the back pressure valve 255, to 107 kPa, for example.

Next, in a state where the mixed gas G is supplied to the adsorption part 221, the adsorption part 221 is taken out of the third container 242, and the adsorption part 221 is immersed in a hot water bath (not shown) at 80°C for two hours or more. Immersion of the adsorption part 221 in the hot water bath is performed until the concentration of carbon dioxide measured by the first concentration meter 250 and the concentration of carbon dioxide measured by the second concentration meter 251 have substantially the same value. Accordingly, with respect to the acidic gas adsorbent sheet in the adsorption part 221, the pretreatment is completed.

(Adsorption test)

Next, in a state where the mixed gas G is supplied to the adsorption part 221, the adsorption part 221 is taken out of the hot water bath and is immersed in the water 271 in the third container 242. Accordingly, a carbon dioxide adsorption test (adsorption test A1) is started with respect to the acidic gas adsorbent sheet in the adsorption part 221. The adsorption test is performed until 15 hours elapses from the start. Specifically, the mixed gas G is continuously fed into the adsorption part 221 for 15 hours.

In the adsorption test A1, an amount of substance M1 of carbon dioxide adsorbed by the acidic gas adsorbent sheet until 1 hour from the start and an amount of substance M2 of carbon dioxide adsorbed by the acidic gas adsorbent sheet until 15 hours from the start are measured. The amount of substance of carbon dioxide adsorbed by the acidic gas adsorbent sheet can be calculated from a result of measuring, over time, the difference between the concentration of carbon dioxide measured by the first concentration meter 250 and the concentration of carbon dioxide measured by the second concentration meter 251. On the basis of the amount of substance M1, the amount of substance of carbon dioxide adsorbed by 1 g of the acidic gas adsorbent sheet until 1 hour from the start of the test is calculated, and the obtained calculated value is identified as an adsorption amount a1. On the basis of the amount of substance M2, the amount of substance of carbon dioxide adsorbed by 1 g of the acidic gas adsorbent sheet until 15 hours from the start of the test is calculated, and the obtained calculated value is identified as an adsorption amount a2. Here, when the adsorption test is performed for 15 hours, the adsorption of carbon dioxide by the acidic gas adsorbent sheet can, normally, be regarded as having reached equilibrium. That is, the adsorption amount a2 is the saturated adsorption amount of carbon dioxide by the acidic gas adsorbent sheet. If the inlet and outlet concentration meters do not stabilize at the same value, it indicates that the adsorption has not yet reached saturation. In this case, using data up to 15 hours, the saturated adsorption amount (adsorption amount a2) at 20°C can be calculated by performing fitting analysis using the Avrami equation, by the method described in Chemical Engineering Journal 161 (2010) 182-190, using analysis software (gnuplot).

(Desorption test)

Next, in a state where the mixed gas G is continuously fed to the adsorption part 221, the adsorption part 221 is taken out from the third container 242 and immersed in a hot water bath (not shown) at 50°C. Accordingly, a desorption test (desorption test B1) for carbon dioxide is started with respect to the acidic gas adsorbent sheet in the adsorption part 221. The desorption test is performed until 15 hours elapses from the start.

In the desorption test B1, an amount of substance M3 of carbon dioxide desorbed from the acidic gas adsorbent sheet until 15 hours from the start is measured. The amount of substance of carbon dioxide desorbed from the acidic gas adsorbent sheet can be calculated from a result of measuring, over time, the difference between the concentration of carbon dioxide measured by the first concentration meter 250 and the concentration of carbon dioxide measured by the second concentration meter 251. On the basis of the amount of substance M3, the amount of substance of carbon dioxide desorbed from 1 g of the acidic gas adsorbent sheet in 15 hours is calculated, and the obtained calculated value is identified as the desorption amount b1. Here, when the desorption test is performed for 15 hours, the desorption of carbon dioxide by the acidic gas adsorbent sheet can, normally, be regarded as having reached equilibrium and being saturated. That is, in the desorption test B1, the saturated desorption amount of carbon dioxide desorbed from the acidic gas adsorbent is measured, and the desorption amount b1 is the saturated desorption amount of carbon dioxide from the acidic gas adsorbent sheet. Therefore, using data up to a time shorter than 15 hours from the start, for example, up to 1.5 hours, the saturated desorption amount at 50°C can also be obtained by performing fitting analysis using the Avrami equation, by the method described in Chemical Engineering Journal 161 (2010) 182-190, using analysis software (gnuplot), and the obtained value can be regarded as the desorption amount b1 of carbon dioxide desorbed from 1 g of the acidic gas adsorbent sheet until 15 hours from the start. A desorption rate Y of carbon dioxide is calculated from the ratio of the desorption amount b1 relative to the adsorption amount a2, that is, the ratio of the saturated desorption amount relative to the adsorption amount. That is, the desorption rate Y is calculated using the following formula.

$$\text{Desorption rate Y (\%)} = b1/a2 \times 100$$

With respect to the acidic gas adsorbent sheet according to the second embodiment, the adsorption amount a1 of carbon dioxide from the start of the test to 1 hour after the start of the test when the adsorption test A1 is performed is preferably 0.5 mmol/g or more and may be 0.52 mmol/g or more, 0.6 mmol/g or more, 0.62 mmol/g or more, 0.66 mmol/g or more, 0.7 mmol/g or more, or even 0.72 mmol/g or more. The upper limit value of the adsorption amount a1 of carbon dioxide is not limited in particular and is, for example, 5.0 mmol/g or less.

With respect to the acidic gas adsorbent sheet according to the second embodiment, the desorption rate Y of carbon dioxide when the desorption test B1 is performed is preferably 82% or more and may be 83% or more, 85% or more, or even 86% or more. The upper limit value of the desorption rate Y of carbon dioxide is not limited in particular and is, for example, 99% or less.

<Production method>

The acidic gas adsorbent sheet according to the second embodiment can be produced, for example, by the production method according to the first embodiment.

<Usage of acidic gas adsorbent sheet>

The acidic gas adsorbent sheet according to the second embodiment can adsorb acidic gas. Examples of the acidic gas include carbon dioxide, hydrogen sulfide, carbonyl sulfide, sulfur oxide ($SO_x$), hydrogen cyanide, and nitrogen oxide ($NO_x$), and preferably, the acidic gas is carbon dioxide.

The acidic gas adsorbent sheet 10 can be used according to the following method, for example. First, mixed gas including acidic gas is brought into contact with the acidic gas adsorbent sheet 10. The mixed gas includes another gas other than acidic gas, for example. Examples of the other gas include nonpolar gas such as hydrogen or nitrogen, and inert gas such as helium, and preferably, the other gas is nitrogen. Typically, the mixed gas is atmospheric air. The mixed gas may be off-gas from a chemical plant or thermal power generation.

The temperature of the mixed gas is room temperature (23°C), for example. The concentration of acidic gas in the mixed gas is not limited in particular, and in a standard state (0°C, 101 kPa), is, for example, 0.01 vol% (100 vol ppm) or more and preferably 0.04 vol% (400 vol ppm) or more, and may be 1.0 vol% or more. The upper limit value of the concentration of carbon dioxide in the mixed gas is not limited in particular, and in a standard state, is 10 vol%, for example. Typically, the pressure of the mixed gas is equal to that of atmospheric air in the use environment of the acidic gas adsorbent sheet 10. However, the mixed gas that is brought into contact with the acidic gas adsorbent sheet 10 may be pressurized.

The acidic gas adsorbent sheet having come into contact with the mixed gas adsorbs acidic gas included in the mixed gas. Operation of bringing the mixed gas into contact with the acidic gas adsorbent sheet is performed until acidic gas adsorption by the acidic gas adsorbent sheet reaches equilibrium, for example.

Next, a regeneration process is performed with respect to the acidic gas adsorbent sheet having adsorbed acidic gas. The regeneration process can be performed by heating the acidic gas adsorbent sheet, for example. The heating temperature of the acidic gas adsorbent sheet is 50 to 80°C, for example. The acidic gas adsorbent sheet may be heated in a reduced-pressure atmosphere or a vacuum atmosphere. Through the heating of the acidic gas adsorbent sheet, acidic gas is desorbed from the acidic gas adsorbent sheet. Accordingly, the acidic gas adsorbent sheet is regenerated and the acidic gas adsorbent sheet can be repeatedly used. The acidic gas, in particular, carbon dioxide, desorbed from the acidic gas adsorbent sheet can be utilized as synthesis raw material for chemicals or dry ice. The adsorption operation of acidic gas by means of the acidic gas adsorbent sheet and the regeneration process of the acidic gas adsorbent sheet can be performed by using the measurement device 200 (acidic gas adsorption device) described above.

[Embodiment of structure]

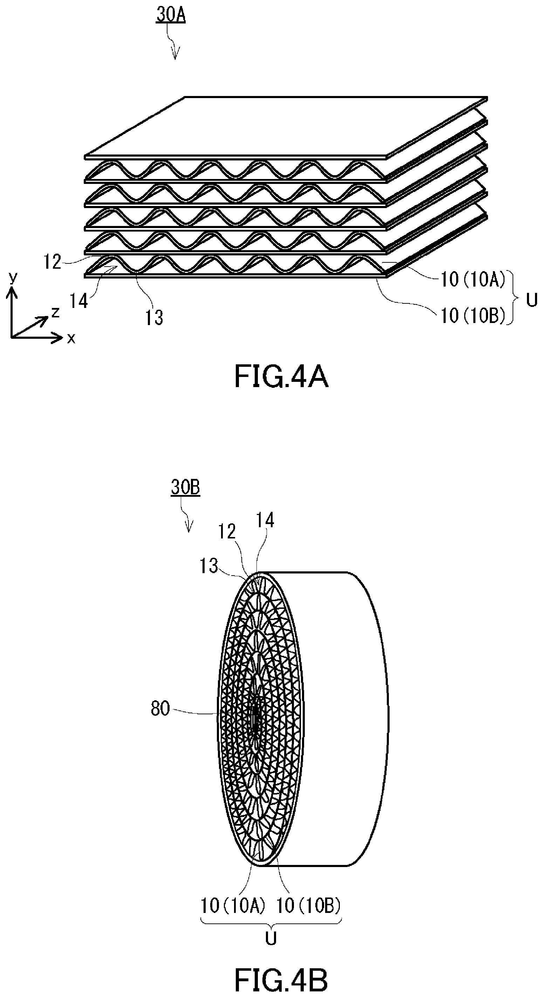

As shown in FIG. 4A, a structure 30A of a third embodiment includes the above-described acidic gas adsorbent sheet 10 and has an air flow path 14. It is also possible to use the acidic gas adsorbent sheet 11 shown in FIG. 3 instead of the acidic gas adsorbent sheet 10. The structure 30A is typically a honeycomb structure having a plurality of air flow paths 14 extending in the same direction.

The structure 30A includes, for example, an adsorbent unit U in which an acidic gas adsorbent sheet 10A having a corrugated shape and an acidic gas adsorbent sheet 10B having a flat plate shape are stacked. In the acidic gas adsorbent sheet 10A, a plurality of hill portions 12 and a plurality of valley portions 13 are alternately aligned. The air flow path 14 is formed between each hill portion 12 or each valley portion 13 of the acidic gas adsorbent sheet 10A and the acidic gas adsorbent sheet 10B. In the present embodiment, a direction x is a direction (wave direction) in which the plurality of hill portions 12 and the plurality of valley portions 13 of the acidic gas adsorbent sheet 10A are alternately aligned. A direction y is a direction in which the acidic gas adsorbent sheets 10A and 10B are stacked in the adsorbent unit U. A direction z is a direction that is orthogonal to each of the directions x and y and in which the air flow paths 14 extend.

The structure 30A includes, for example, a plurality of adsorbent units U. The number of adsorbent units U in the structure 30A is not limited in particular, and is 2 to 100, for example. In the structure 30A, the plurality of adsorbent units U are stacked in the direction y such that a plurality of acidic gas adsorbent sheets 10A and a plurality of acidic gas adsorbent sheets 10B are alternately aligned. When the plurality of adsorbent units U are stacked, the structure 30A has a block shape.

Each air flow path 14 is a through hole penetrating the structure 30A in the direction z. The air flow path 14 is surrounded by the acidic gas adsorbent sheets 10A and 10B. In the structure 30A, acidic gas is efficiently adsorbed by the acidic gas adsorbent sheets 10A and 10B while moving in the direction z through the air flow path 14.

In the structure 30A, the smaller the thicknesses of the resin sheets 1 of the acidic gas adsorbent sheets 10A and 10B are, the larger the cross-sectional area of each air flow path 14 can be adjusted. The structure 30A in which the cross-sectional area of each air flow path 14 is large is suitable for reducing the pressure loss that occurs, for example, when in contact with acidic gas. With the structure 30A having reduced pressure loss, for example, the power of a fan used to move acidic gas can be reduced. Since the amount of substance of amino group per unit volume of the acidic gas adsorbent sheet 10 tends to be relatively large, the acidic gas adsorbent sheet 10 tends to be able to sufficiently adsorb acidic gas even if the thickness of the resin sheet 1 is small.

<Modification of structure>

The shape of the structure 30A including the acidic gas adsorbent sheets 10 is not limited to the one shown in FIG. 4A. A structure 30B shown in FIG. 4B has a shape in which one adsorbent unit U is wound on a center tube 80. Except for this, the configuration of the structure 30B is the same as that of the structure 30A.

The structure 30B has a columnar shape. In the structure 30B, the plurality of hill portions 12 and the plurality of valley portions 13 of the acidic gas adsorbent sheet 10A are alternately aligned in the circumferential direction of the structure 30B. The air flow path 14 formed between each hill portion 12 or each valley portion 13 of the acidic gas adsorbent sheet 10A and the acidic gas adsorbent sheet 10B penetrates the structure 30B in a direction in which the center tube 80 extends. In the structure 30B, acidic gas is efficiently adsorbed by the acidic gas adsorbent sheets 10A and 10B while moving through the air flow path 14 in the direction in which the center tube 80 extends.

[Example]

In the following, the present invention will be described in further detail using Examples. However, the present invention is not limited thereto.

(Example 1)

First, a compound C1, a compound C2, and a porogen were put in a 300 ml cylindrical container ("Tight Boy", manufactured by THINKY CORPORATION). As the compound C1, 64.34 g of triethylenetetramine (manufactured by Tosoh Corporation) was used. As the compound C2, 10 g of ethylene glycol diglycidyl ether (DENACOL EX-810, manufactured by Nagase ChemteX Corporation) and 15 g of pentaerythritol tetraglycidyl ether (SHOFREE (registered trademark) PETG, manufactured by Showa Denko K.K.) were used. As the porogen, 56.69 g of poly(1,2-butanediol)-6-propylene glycol (UNIOL (registered trademark) PB-500, manufactured by NOF CORPORATION) and 56.69 g of polyoxypropylene glyceryl ether (UNILUB (registered trademark) DGP-700, manufactured by NOF CORPORATION) were used. These materials were stirred at 650 rpm and 0.2 kPa for 5 minutes using a rotary/revolutionary mixer ("Awatori-Rentaro" (vacuum), manufactured by THINKY CORPORATION) to obtain a mixed solution of the compound C1, the compound C2, and the porogen. The mixed solution was heated at 60°C for 3 hours to produce a reaction product P1.

The ratio (E/A) of the equivalent (E) of the epoxy group included in the epoxy monomer relative to the equivalent (A) of active hydrogen of the primary amino group included in the amine monomer used to produce the reaction product P1 was 0.16. The mixed solution including the reaction product P1 was cooled, and the viscosity at a shear rate of 1 $s^{-1}$ at 25°C was measured.

The mixed solution including the reaction product P1 was stored in a refrigerator at 4°C.

Then, 21.26 g of ethylene glycol diglycidyl ether (DENACOL EX-810, manufactured by Nagase ChemteX Corporation) and 31.89 g of pentaerythritol tetraglycidyl ether (SHOFREE (registered trademark) PETG, manufactured by Showa Denko K.K.) were mixed to prepare an epoxy solution, and the epoxy solution was stored in a refrigerator at 4°C.

The epoxy solution was added to the mixed solution including the reaction product P1. As a result, the ratio (E/A) of the equivalent (E) of the epoxy group relative to the equivalent (A) of active hydrogen of the primary amino group in all the materials used was 0.5. Then, the mixed solution was stirred at 310 rpm using a stirring blade at room temperature to obtain a reaction solution P2.

While the reaction solution P2 was stirred, the temperature of the reaction solution P2 was monitored, and when the temperature reached 20°C, the stirring was stopped. A glass paper with a thickness of 250 μm was immersed for 10 seconds in the reaction solution P2 whose temperature was 20°C, and then the glass paper was taken out therefrom. The obtained immersed sheet was cured by allowing the sheet to stand at 120°C for 1 hour. Accordingly, a sheet-shaped cured body was obtained. An operation of immersing the cured body in ethyl acetate at 60°C for 30 minutes was repeated twice with liquid replacement. Accordingly, the porogen was removed from the cured body to form a resin sheet having a porous structure. Next, the resin sheet was dried in a dryer at 60°C for 1 hour to obtain an acidic gas adsorbent sheet of Example 1 in which the resin sheet was combined in the glass paper sheet.

(Example 2)

An acidic gas adsorbent sheet of Example 2 was obtained in the same manner as in Example 1, except that the reaction solution P2 was stirred until the temperature thereof reached 30°C, and a glass paper was immersed in the reaction solution P2 whose temperature was 30°C.

(Example 3)

An acidic gas adsorbent sheet of Example 3 was obtained in the same manner as in Example 1, except that the types and blending amounts of raw materials were changed as shown in Table 1, the reaction solution P2 was stirred until the temperature thereof reached 30°C, and a glass paper was immersed in the reaction solution P2 whose temperature was 30°C. That is, the acidic gas adsorbent sheet of Example 3 was obtained by the same operation as in Example 2, except for the types and blending amounts of raw materials.

(Example 4)

An acidic gas adsorbent sheet of Example 4 was obtained in the same manner as in Example 1, except that the types and blending amounts of raw materials were changed as shown in Table 1, the reaction solution P2 was stirred until the temperature thereof reached 30°C, and a glass paper was immersed in the reaction solution P2 whose temperature was 30°C. That is, the acidic gas adsorbent sheet of Example 4 was obtained by the same operation as in Example 2, except for the types and blending amounts of raw materials.

(Example 5)

First, a compound C1, a compound C2, and a porogen were put in a 300 ml cylindrical container ("Tight Boy", manufactured by THINKY CORPORATION). As the compound C1, 82.51 g of polyethyleneimine (EPOMIN SP-003, manufactured by NIPPON SHOKUBAI CO., LTD.) was used. As the compound C2, 6.2 g of ethylene glycol diglycidyl ether (DENACOL EX-810, manufactured by Nagase ChemteX Corporation) was used. As the porogen, 51.63 g of poly(1,2-butanediol)-6-propylene glycol (UNIOL (registered trademark) PB-500, manufactured by NOF CORPORATION) and 51.63 g of a copolymer of butylene glycol and propylene glycol (UNIOL (registered trademark) PB-700, manufactured by NOF CORPORATION) were used. These materials were stirred at 1000 rpm and 0.2 kPa for 5 minutes using a rotary/revolutionary mixer ("Awatori-Rentaro" (vacuum), manufactured by THINKY CORPORATION) to obtain a mixed solution of the compound C1, the compound C2, and the porogen. The mixed solution was heated at 60°C for 3 hours to produce a reaction product P1. The mixed solution including the reaction product P1 was cooled, and the viscosity at a shear rate of 1 $s^{-1}$ at 25°C was measured.

The ratio (E/A) of the equivalent (E) of the epoxy group relative to the equivalent (A) of active hydrogen of the primary amino group in the materials used to produce the reaction product P1 was 0.05. The mixed solution including the obtained reaction product P1 was stored in a refrigerator at 4°C.

Then, 55.8 g of ethylene glycol diglycidyl ether (DENACOL EX-810, manufactured by Nagase ChemteX Corporation) was stored in a refrigerator at 4°C.

The above ethylene glycol diglycidyl ether was added to the mixed solution including the reaction product P1. As a result, the ratio (E/A) of the equivalent (E) of the epoxy group relative to the equivalent (A) of active hydrogen of the primary amino group in all the materials used was 0.5. Then, the mixed solution was stirred at 310 rpm using a stirring blade at room temperature to obtain a reaction solution P2.

While the reaction solution P2 was stirred, the temperature of the reaction solution P2 was monitored, and when the temperature reached 25°C, the stirring was stopped. A glass paper with a thickness of 250 $\mu$m was immersed for 10 seconds in the reaction solution P2 whose temperature was 25°C, and then the glass paper was taken out therefrom. The obtained immersed sheet was cured by allowing the sheet to stand at 120°C for 10 minutes. Accordingly, a sheet-shaped cured body was obtained. An operation of immersing the cured body in ethyl acetate at 60°C for 30 minutes was repeated twice with liquid replacement. Accordingly, the porogen was removed from the cured body to form a resin sheet having a porous structure. Next, the resin sheet was dried in a dryer at 60°C for 1 hour to obtain an acidic gas adsorbent sheet of Example 5 in which the resin sheet was combined in the glass paper sheet.

(Comparative Example 1)

31.27 g of ethylene glycol diglycidyl ether (DENACOL EX-810, manufactured by Nagase ChemteX Corporation), 46.89 g of pentaerythritol tetraglycidyl ether (SHOFREE (registered trademark) PETG, manufactured by Showa Denko K.K.), 56.69 g of poly(1,2-butanediol)-6-propylene glycol (UNIOL (registered trademark) PB-500, manufactured by NOF CORPORATION), and 56.69 g of polyoxypropylene glyceryl ether (UNILUB (registered trademark) DGP-700, manufactured by NOF CORPORATION) were put in a 300 ml cylindrical container ("Tight Boy", manufactured by THINKY CORPORATION) and stirred at 650 rpm and 0.2 kPa for 5 minutes using a rotary/revolutionary mixer ("Awatori-Rentaro" (vacuum), manufactured by THINKY CORPORATION) to obtain a mixed solution of a compound C2 and a porogen. The mixed solution was stored in a refrigerator at 4°C. Separately, 64.34 g of triethylenetetramine (manufactured by Tosoh Corporation) was stored in a refrigerator at 4°C as a compound C1. Then, the mixed solution and the compound C1 were mixed. The ratio (E/A) of the equivalent (E) of the epoxy group relative to the equivalent (A) of active hydrogen of the primary amino group in all the materials used was 0.5. Then, the mixed solution was stirred at 310 rpm using a stirring blade at room temperature to carry out a reaction.

While the reaction solution was stirred, the temperature of the reaction solution was monitored, and when the temperature reached 25°C, the stirring was stopped. A glass paper with a thickness of 250 $\mu$m was immersed for 10 seconds in the reaction solution whose temperature was 25°C, and then the glass paper was taken out therefrom. The obtained immersed sheet was cured by allowing the sheet to stand at 120°C for 1 hour. Accordingly, a sheet-shaped cured body was obtained. An operation of immersing the cured body in ethyl acetate at 60°C for 30 minutes was repeated twice with liquid replacement. Accordingly, the porogen was removed from the cured body to form a resin sheet having a porous structure. Next, the resin sheet was dried in a dryer at 60°C for 1 hour to obtain an acidic gas adsorbent sheet of Comparative Example 1 in which the resin sheet was combined in the glass paper sheet.

(Comparative Example 2)

An acidic gas adsorbent sheet of Comparative Example 2 was obtained in the same manner as in Comparative Example 1, except that the reaction solution was stirred until the temperature thereof reached 35°C, and a glass paper was immersed in the reaction solution whose temperature was 35°C.

(Comparative Example 3)

77.65 g of polyethyleneimine (EPOMIN SP-012, manufactured by NIPPON SHOKUBAI CO., LTD.), 48.6 g of poly(1,2-butanediol)-6-propylene glycol (UNIOL (registered trademark) PB-500, manufactured by NOF CORPORATION), and 48.6 g of polyoxypropylene glyceryl ether (UNILUB (registered trademark) DGP-700, manufactured by NOF CORPORATION) were put in a 300 ml cylindrical container ("Tight Boy", manufactured by THINKY CORPORATION) and stirred at 1000 rpm and 0.2 kPa for 5 minutes using a rotary/revolutionary mixer ("Awatori-Rentaro" (vacuum), manufactured by THINKY CORPORATION) to obtain a mixed solution of a compound C1 and a porogen. The mixed solution was stored in a refrigerator at 4°C. Separately, 58.1 g of ethylene glycol diglycidyl ether (DENACOL EX-810, manufactured by Nagase ChemteX Corporation) was stored in a refrigerator at 4°C as a compound C2. Then, the mixed solution and the compound C2 were mixed. The ratio (E/A) of the equivalent (E) of the epoxy group relative to the equivalent (A) of active hydrogen of the primary amino group in all the materials used was 0.5. Then, the mixed solution was stirred at 310 rpm using a stirring blade at room temperature to carry out a reaction.

While the reaction solution was stirred, the temperature of the reaction solution was monitored, and when the temperature reached 25°C, the stirring was stopped. A glass paper with a thickness of 250 $\mu$m was immersed for 10 seconds in the reaction solution whose temperature was 25°C, and then the glass paper was taken out therefrom. The obtained immersed sheet was cured by allowing the sheet to stand at 120°C for 10 minutes. Accordingly, a sheet-shaped cured body was obtained. An operation of immersing the cured body in ethyl acetate at 60°C for 30 minutes was repeated twice with liquid replacement. Accordingly, the porogen was removed from the cured body to form a resin sheet having a porous structure. Next, the resin sheet was dried in a dryer at 60°C for 1 hour to obtain an acidic gas adsorbent sheet of Comparative Example 3 in which the resin sheet was combined in the glass paper sheet.

(Comparative Example 4)

An acidic gas adsorbent sheet of Comparative Example 4 was obtained in the same manner as in Comparative Example 3 except that the reaction solution was stirred until the temperature thereof reached 35°C, and a glass paper was immersed in the reaction solution whose temperature was 35°C.

<Observation of cross-sections of acidic gas adsorbent sheets>

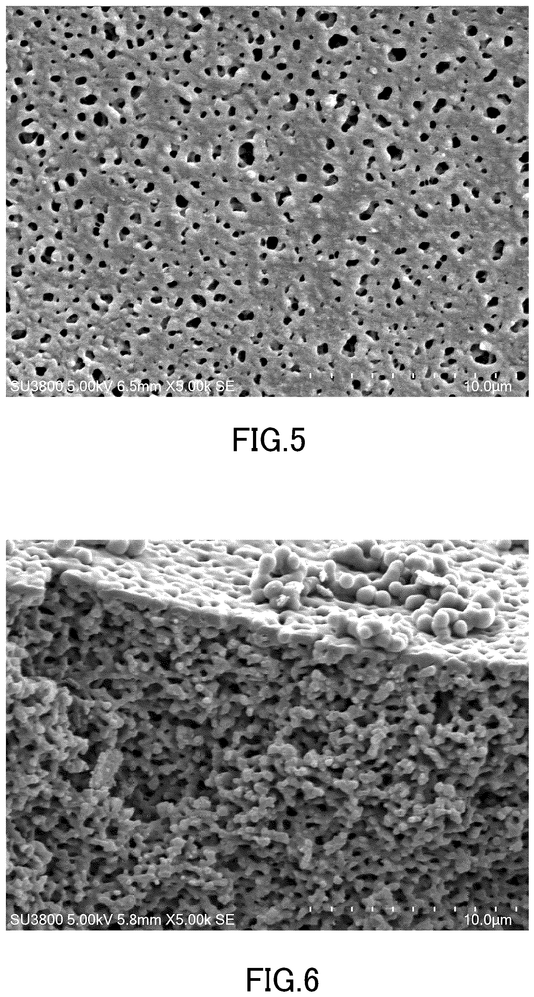

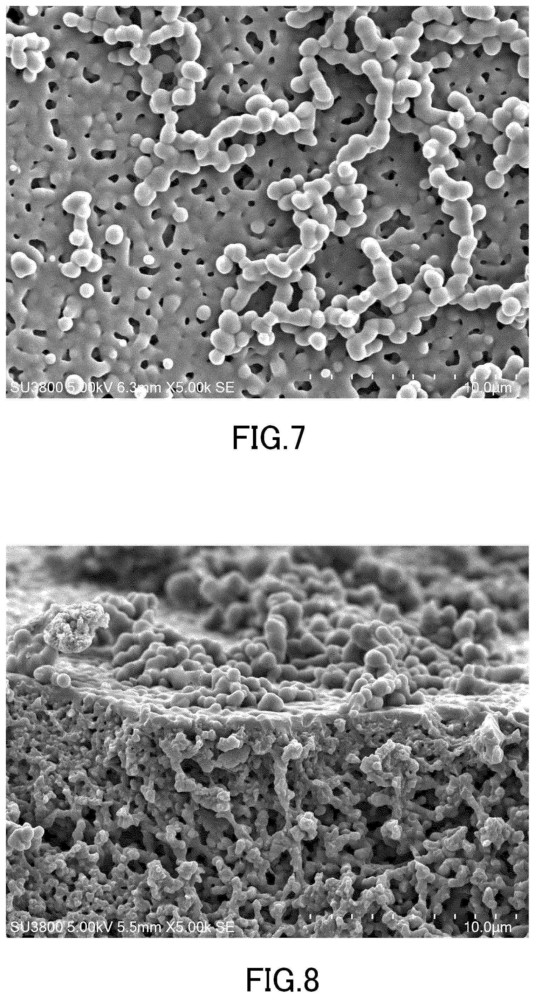

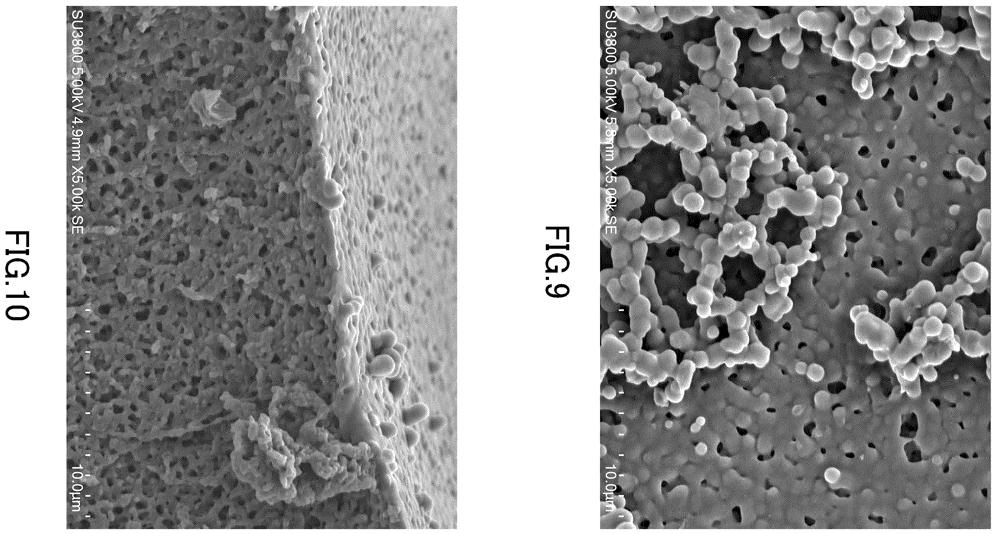

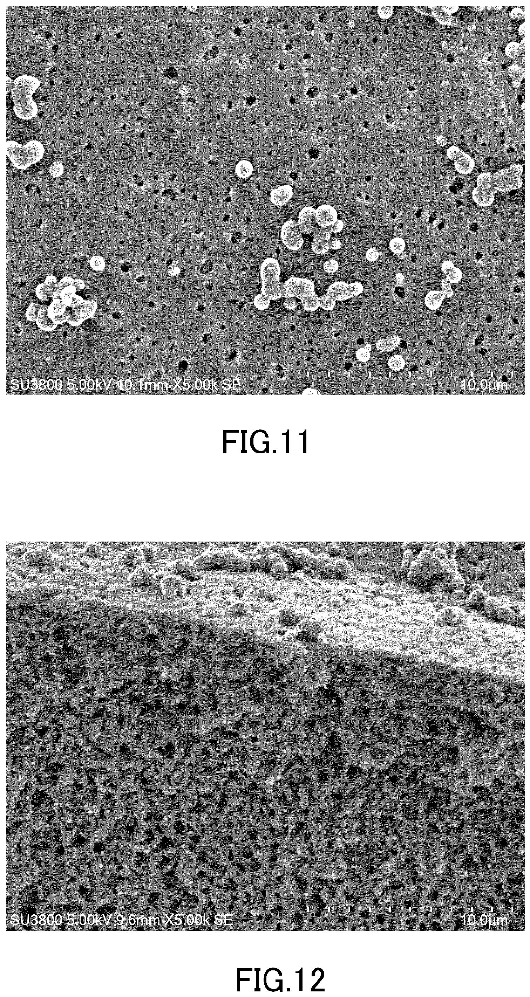

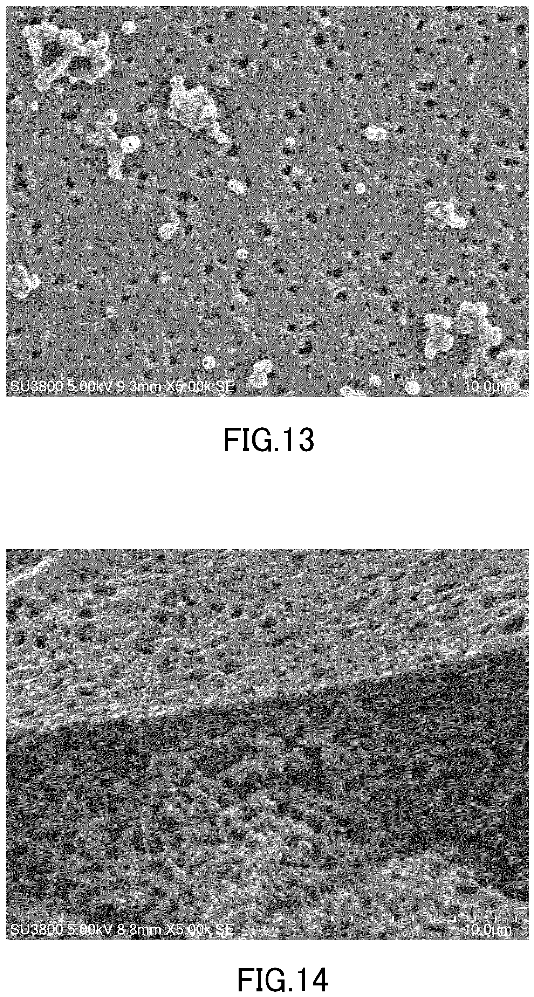

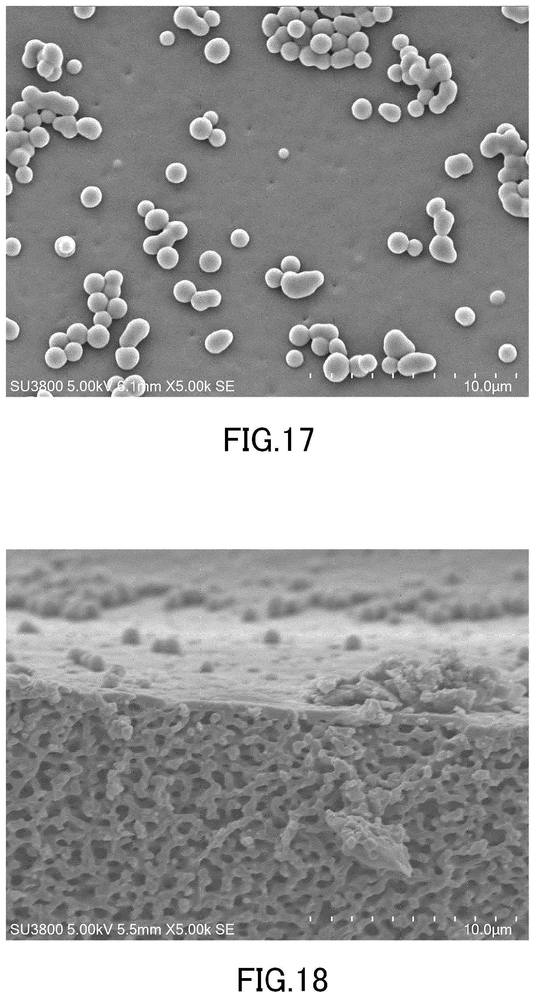

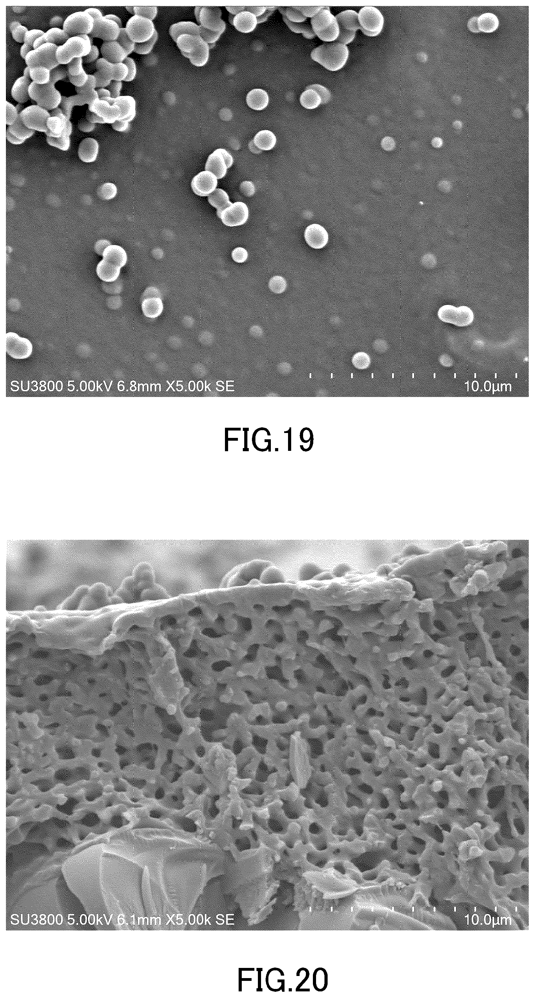

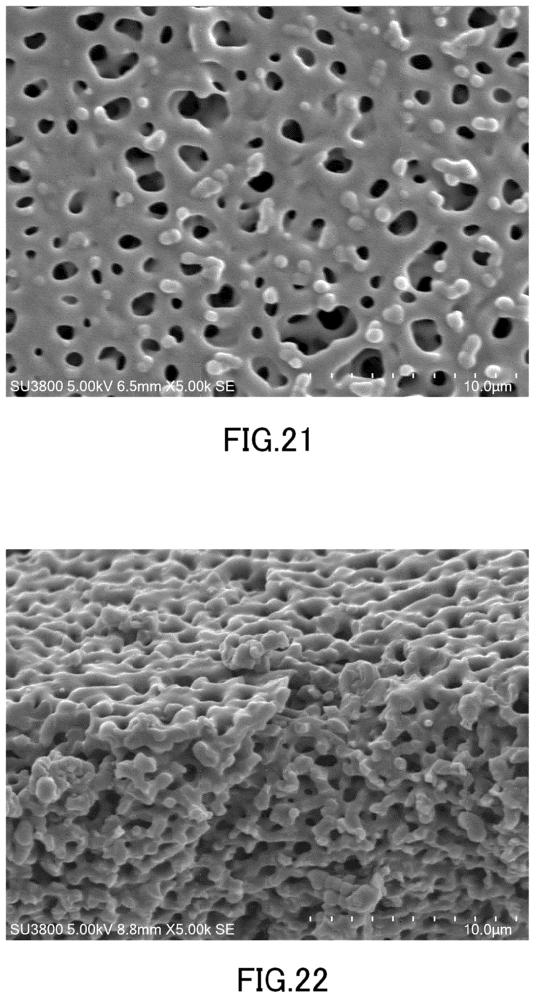

The surfaces and cross-sections of the acidic gas adsorbent sheets produced in Examples 1 to 5 and Comparative Examples 1 to 4 were observed at 5000 times using a scanning electron microscope (SEM). The results are shown in FIG. 5 to FIG. 22.

<Carbon dioxide adsorption and desorption tests>

With respect to the acidic gas adsorbent sheets of Examples 1 to 5 and Comparative Examples 1 to 4, the adsorption test A1 and the desorption test B1 were performed, the adsorption amount a1, the adsorption amount a2 (saturated adsorption amount), and the desorption amount b1 (saturated desorption amount) were calculated, and the adsorption rate (60 min adsorption rate) after 1 hour from the start of the adsorption test and the desorption rate at 50°C were obtained. Here, in the adsorption test A1, the saturated adsorption amount obtained by performing fitting analysis using the Avrami equation for data up to 15 hours after the start of the adsorption test was regarded as the adsorption amount a2. In addition, in the desorption test B1, the saturated desorption amount obtained by performing fitting analysis using the Avrami equation for data up to 1.5 hours after the start of the desorption test was regarded as the desorption amount b1. The results of the tests are shown in Table 3. Here, the 60 min adsorption rate can be calculated using the following formula.

$$60 \text{ min adsorption rate (\%)} = \text{adsorption amount a1/adsorption amount a2} \times 100$$

[Table 1]

| | Step (I) | | | | | | | | | | | Ratio E/A (*1) | Mixed solution viscosity [mPa·s] |
|---|---|---|---|---|---|---|---|---|---|---|---|---|---|
| | Compound C1 | | Compound C2 | | | | Porogen | | | | | | |
| | | | ① | | ② | | ① | | ② | | | | |
| | Type | Blending amount [g] | Type | Blending amount [g] | Type | Blending amount [g] | Type | Blending amount [g] | Type | Blending amount [g] | | | |
| Ex. 1 | TETA | 64.34 | EDE | 10 | PETG | 15 | PB500 | 56.69 | DGP700 | 56.69 | | 0.16 | 2675 |
| Ex. 2 | TETA | 64.34 | EDE | 10 | PETG | 15 | PB500 | 56.69 | DGP700 | 56.69 | | 0.16 | 2675 |
| Ex. 3 | TETA | 64.34 | EDE | 8.14 | PETG | 12.19 | PB500 | 56.66 | DGP700 | 56.66 | | 0.13 | 1983 |
| Ex. 4 | TETA | 64.34 | EDE | 7.51 | PETG | 11.26 | PB500 | 56.66 | DGP700 | 56.66 | | 0.12 | 1651 |
| Ex. 5 | PEI120 0 | 82.51 | EDE | 6.2 | - | - | PB500 | 51.63 | PB700 | 51.63 | | 0.05 | 4000 |

(*1) The ratio E/A of the equivalent (E) of the epoxy group relative to the equivalent (A) of active hydrogen of the primary amino group in the mixed solution in the step (I).

(*2) The ratio E/A of the equivalent (E) of the epoxy group relative to the equivalent (A) of active hydrogen of the primary amino group with respect to the compounds C1 and C2 used until the step (II).

EP 4 596 100 A1

[Table 1](cont,)

| | Step (II) | | | | Step (I)+(II) | Step (III) |
| | Compound C2 | | | | | Reaction solution temperature during immersion of glass paper [°C] |
| | ① | | ② | | Ratio E/A (*2) | |
| | Type | Blending amount [g] | Type | Blending amount [g] | | |
| Ex. 1 | EDE | 21.26 | PETG | 31.89 | 0.5 | 20 |
| Ex. 2 | EDE | 21.26 | PETG | 31.89 | 0.5 | 30 |
| Ex. 3 | EDE | 23.14 | PETG | 34.70 | 0.5 | 30 |
| Ex. 4 | EDE | 23.76 | PETG | 35.64 | 0.5 | 30 |
| Ex. 5 | EDE | 55.8 | - | - | 0.5 | 25 |

(*1) The ratio E/A of the equivalent (E) of the epoxy group relative to the equivalent (A) of active hydrogen of the primary amino group in the mixed solution in the step (I).
(*2) The ratio E/A of the equivalent (E) of the epoxy group relative to the equivalent (A) of active hydrogen of the primary amino group with respect to the compounds C1 and C2 used until the step (II).

[Table 2]

| | Compound C1 | | Compound C2 | | | | Porogen | | | | Equivalent ratio E/A | Reaction solution temperature during immersion of glass paper [°C] |
| | | | ① | | ② | | ① | | ② | | | |
| | Type | Blending amount [g] | Type | Blending amount [g] | Type | Blending amount [g] | Type | Blending amount [g] | Type | Blending amount [g] | | |
| Comp. Ex. 1 | TETA | 64.34 | EDE | 31.27 | PETG | 46.89 | PB500 | 56.69 | DGP700 | 56.69 | 0.5 | 25 |
| Comp. Ex. 2 | TETA | 64.34 | EDE | 31.27 | PETG | 46.89 | PB500 | 56.69 | DGP700 | 56.69 | 0.5 | 35 |
| Comp. Ex. 3 | PEI1200 | 77.65 | EDE | 58.1 | - | - | PB500 | 48.6 | PB700 | 48.6 | 0.5 | 25 |
| Comp. Ex. 4 | PEI1200 | 77.65 | EDE | 58.1 | - | - | PB500 | 48.6 | PB700 | 48.6 | 0.5 | 35 |

The abbreviations in Table 1 and Table 2 are as follows.

TETA: triethylenetetramine (manufactured by Tosoh Corporation)
PEI1200: polyethyleneimine (EPOMIN SP-012, manufactured by NIPPON SHOKUBAI CO., LTD., weight average molecular weight: about 1200)
EDE: ethylene glycol diglycidyl ether (EX-810, manufactured by Nagase ChemteX Corporation)
PETG: pentaerythritol tetraglycidyl ether (SHOFREE (registered trademark) PETG, manufactured by Showa Denko K.K.)
PB500: poly(1,2-butanediol)-6-propylene glycol (UNIOL (registered trademark) PB-500, manufactured by NOF CORPORATION)
DGP700: polyoxypropylene glyceryl ether (UNILUB (registered trademark) DGP-700, manufactured by NOF CORPORATION)
PB700: copolymer of butylene glycol and propylene glycol (UNIOL (registered trademark) PB-700, manufactured by NOF CORPORATION)

[Table 3]

|  | Thickness of skin layer [μm] | Adsorption amount a1 [mmol/g] | Adsorption amount a2 [mmol/g] | 60 min adsorption rate [%] | Desorption rate Y (50°C) [%] |
|---|---|---|---|---|---|
| Example 1 | 0 | 0.52 | 1.23 | 42 | 85 |
| Example 2 | 0 | 0.66 | 1.35 | 49 | 96 |
| Example 3 | 0 | 0.52 | 1.30 | 59 | 86 |
| Example 4 | 0 | 0.62 | 1.21 | 51 | 85 |
| Example 5 | 0 | 0.74 | 2.06 | 36 | 83 |
| Com parative Example 1 | 0.52 | 0.35 | 1.24 | 28 | 88 |
| Com parative Example 2 | 0.49 | 0.40 | 1.28 | 32 | 92 |
| Com parative Example 3 | 0.66 | 0.37 | 1.83 | 20 | 82 |
| Com parative Example 4 | 0 | 0.38 | 1.73 | 22 | 88 |

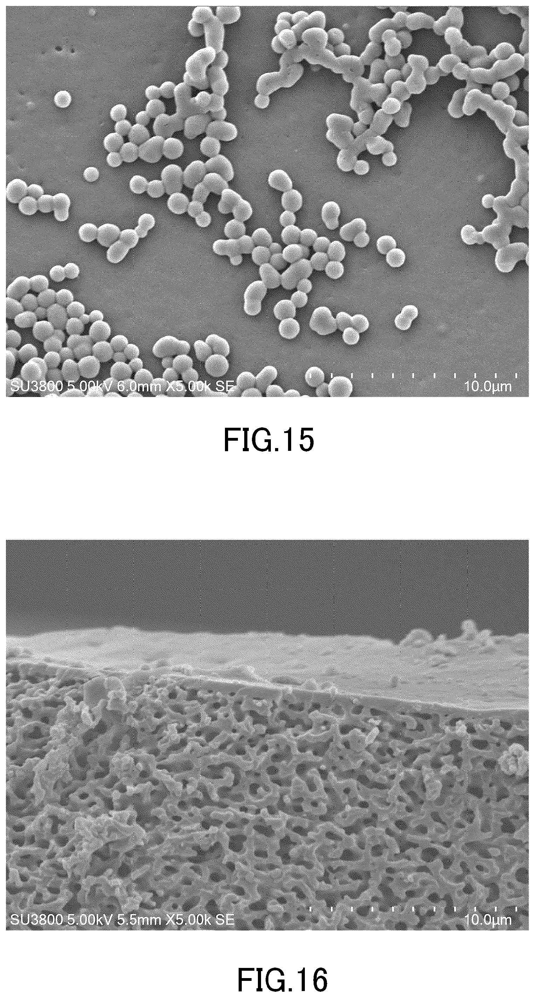

As can be seen from FIGS. 5 to 14, the acidic gas adsorbent sheets of Examples 1 to 5 each had a three-dimensional network skeleton composed of a polymer and had pores at the surface thereof. That is, the acidic gas adsorbent sheets of Examples 1 to 5 did not have a skin layer. As can be seen from FIGS. 15 to 20, the acidic gas adsorbent sheets of Comparative Examples 1 to 3 did not have pores at the surface thereof and had a skin layer. The thicknesses of the skin layers of the acidic gas adsorbent sheets of Comparative Examples 1 to 3 are shown in Table 3.

Examples 1 to 5 had an improved 60 min adsorption rate compared to Comparative Examples 1 to 4. That is, in Examples 1 to 5, carbon dioxide was adsorbed more quickly than in Comparative Examples 1 to 4. Comparative Example 4 did not have a skin layer but had a 60 min adsorption rate lower than those of Examples 1 to 5. In Comparative Example 4, phase separation excessively proceeded before a sheet-shaped cured body was obtained, so that the porous structure became coarse, and therefore, it is considered that the adsorption ability was lower than that of Examples 1 to 5. Therefore, it can be found that the acidic gas adsorbent sheet produced by the production method of the present invention is suitable for improving the acidic gas adsorption ability.

INDUSTRIAL APPLICABILITY

The acidic gas adsorbent sheet produced by the production method of the present embodiment is suitable for adsorbing and desorbing acidic gas.

**Claims**

1. A production method for an acidic gas adsorbent sheet, comprising:

a step (I) of, in a mixed solution including a compound C1 having a primary amino group, a compound C2 having an epoxy group, and a porogen and having an equivalent of the primary amino group greater than an equivalent of the epoxy group, reacting the compound C1 and the compound C2 to obtain a reaction product;

a step (II) of cooling the mixed solution including the reaction product, then adding the compound C2 to the mixed solution, and reacting the reaction product and the compound C2 to obtain a reaction solution;

a step (III) of curing the reaction solution to obtain a sheet-shaped cured body; and

a step (IV) of removing the porogen from the sheet-shaped cured body.

2. The production method according to claim 1, wherein the cooling is performed to 10°C or lower.

3. The production method according to claim 1, wherein the compound C1 includes an amine monomer.

4. The production method according to claim 1, wherein, in the step (I), a ratio E/A of an equivalent (E) of the epoxy group relative to an equivalent (A) of active hydrogen of the primary amino group is 0.3 or less.

5. The production method according to claim 1, wherein, with respect to the compound C1 and the compound C2 used until the step (II), a ratio E/A of an equivalent (E) of the epoxy group relative to an equivalent (A) of active hydrogen of the primary amino group is greater than 0.3 and less than 1.

6. The production method according to claim 1, wherein a viscosity at 25°C of the mixed solution including the reaction product is 10000 mPa·s or less.

7. The production method according to claim 1, wherein the step (III) includes bringing the reaction solution into contact with a sheet-shaped substrate and then curing the reaction solution in contact with the substrate, to obtain the sheet-shaped cured body.

8. The production method according to claim 7, wherein the substrate includes a fiber structure.

9. The production method according to claim 8, wherein the reaction solution is brought into contact with the substrate to cause the reaction solution to soak into the substrate.

10. An acidic gas adsorbent sheet comprising a polymer having an amino group, wherein

when the following adsorption test A1 is performed, an adsorption amount of carbon dioxide from start of the test to 1 hour after the start of the test is greater than 0.4 mmol/g, and

when the following desorption test B1 is performed, a desorption rate of carbon dioxide is greater than 80%,

adsorption test A1: mixed gas composed of carbon dioxide, nitrogen, and water vapor is continuously fed into a container containing the acidic gas adsorbent sheet for 15 hours, wherein a concentration of the carbon dioxide in the mixed gas is 400 vol ppm, and the mixed gas has a temperature of 20°C and a humidity of 50%RH, and

desorption test B1: the acidic gas adsorbent sheet after the adsorption test A1 is performed is heated at 50°C for 15 hours while the mixed gas is continuously fed into the container.

11. The acidic gas adsorbent sheet according to claim 10, having a porous structure.

12. The acidic gas adsorbent sheet according to claim 10, wherein a skin layer at a surface of the acidic gas adsorbent sheet has a thickness of 0.48 $\mu$m or less.

13. The acidic gas adsorbent sheet according to claim 10, further comprising a substrate.

14. The acidic gas adsorbent sheet according to claim 13, wherein the substrate includes a fiber structure.

FIG.1

10

FIG.2

11

FIG.3

FIG.4A

FIG.4B

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

## INTERNATIONAL SEARCH REPORT

International application No.

**PCT/JP2023/035227**

| A. | CLASSIFICATION OF SUBJECT MATTER |
|---|---|

***B01J 20/30***(2006.01)i; ***B01D 53/04***(2006.01)i; ***B01J 20/26***(2006.01)i
FI: B01J20/30; B01J20/26 A; B01D53/04 220

According to International Patent Classification (IPC) or to both national classification and IPC

| B. | FIELDS SEARCHED |
|---|---|

Minimum documentation searched (classification system followed by classification symbols)

B01J20/00-20/28;20/30-20/34; B01D53/00-53/96;C01B32/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/246383 A1 (NITTO DENKO CORP.) 09 December 2021 (2021-12-09) entire text | 1-14 |
| A | JP 2017-47412 A (HITACHI CHEMICAL CO., LTD.) 09 March 2017 (2017-03-09) entire text, all drawings | 1-14 |
| A | JP 2018-509280 A (UNIV. OF SOUTHERN CALIFORNIA) 05 April 2018 (2018-04-05) entire text, all drawings | 1-14 |
| P, A | WO 2023/063050 A1 (NITTO DENKO CORP.) 20 April 2023 (2023-04-20) entire text, all drawings | 1-14 |
| P, A | WO 2023/063051 A1 (NITTO DENKO CORP.) 20 April 2023 (2023-04-20) entire text, all drawings | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 596 100 A1

| INTERNATIONAL SEARCH REPORT<br>Information on patent family members | | International application No.<br>**PCT/JP2023/035227** |
|---|---|---|

| Patent document<br>cited in search report | Publication date<br>(day/month/year) | Patent family member(s) | Publication date<br>(day/month/year) |
|---|---|---|---|
| WO 2021/246383 A1 | 09 December 2021 | EP 4159308 A1<br>entire text<br>CN 115702037 A | |
| JP 2017-47412 A | 09 March 2017 | (Family: none) | |
| JP 2018-509280 A | 05 April 2018 | US 2016/0199810 A1<br>entire text, all drawings<br>WO 2016/114991 A1<br>CA 2973572 A1<br>KR 10-2017-0127416 A | |
| WO 2023/063050 A1 | 20 April 2023 | (Family: none) | |
| WO 2023/063051 A1 | 20 April 2023 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014533195 A

**Non-patent literature cited in the description**

- *Chemical Engineering Journal*, 2010, vol. 161, 182-190